(19)

Europäisches
Patentamt
European
Patent Office
Office européen
des brevets

(11) **EP 4 718 344 A1**

(12) **EUROPEAN PATENT APPLICATION**

(43) Date of publication:
01.04.2026 Bulletin 2026/14

(21) Application number: 25204260.1

(22) Date of filing: 24.09.2025

(51) International Patent Classification (IPC):
*G06N 10/70* (2022.01)

(52) Cooperative Patent Classification (CPC):
G06N 10/70

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 US 202463699940 P

(71) Applicant: Xanadu Quantum Technologies Inc.
Toronto, ON M5G 2C8 (CA)

(72) Inventors:
• Nadkarni, Priya Jai Bharath
Toronto (CA)
• Dauphinais, Guillaume
Toronto (CA)
• Gowda, Manoj
Nelamangala (IN)
• Lde, Benjamín Christopher
Atlanta (GA)

(74) Representative: Lehmann Novo, Maria Isabel
Lehmann & Fernández, S.L.
Calle Alvarez de Baena, 4
28006 Madrid (ES)

(54) **FAULT-TOLERANT LOGICAL PAULI MEASUREMENTS FOR QLDPC CODES**

(57) A method of performing fault-tolerant homological measurements on a quantum computer for quantum error correction. A quantum code is defined by a first check matrix of a first Pauli type, and a second check matrix of a second Pauli type. The hypergraph state of the quantum code is generated to determine a chain map with a first and a second component along with a first and a second linear transformation that provides mapping between a first chain complex derived from the check matrices to a second chain complex. The chain map and the linear transformations enable the determination of updated check matrices, where a homological measurement on the updated matrices is equivalent to or obtains the same results as performing the measurement on the original check matrices. Ancillary qubits may be prepared on a quantum computer based on the party checks of the updated check matrices to enable homological measurements.

100

102 receiving a quantum code comprising of a plurality of qubits and a logical operator of one or more of a first Pauli type and a second Pauli type having support on a subset of the plurality of qubits, the quantum code is defined, at least in part, by a first check matrix representing a first set of parity checks of the first Pauli type and a second check matrix representing a second set of parity checks of the second Pauli type

104 determining a hypergraph state representative of the quantum code from the plurality of qubits, the first check matrix, and second check matrix

106 determining, based on the hypergraph state, a cone code that provides mapping between a first chain complex C derived from the first and second check matrices to a second chain complex A

108 constructing a third check matrix of the first Pauli type and a fourth check matrix of the second Pauli type from the cone code, the third check matrix representing a third set of parity checks of the first Pauli type that are homologically equivalent to the first set of parity checks and the fourth check matrix representing a fourth set of parity checks of the second Pauli type that are homologically equivalent to the second set of parity checks

110 preparing, on a quantum computer, a plurality of ancillary qubits in support of the third set of parity checks of the first Pauli type and the fourth set of parity checks of the second Pauli type

112 performing one or more homological measurements on the plurality of ancillary qubits

FIG. 1

**Description**

**RELATED APPLICATIONS**

This application claims priority to, and the benefit of, United States Provisional Patent Application No. 63/699,940, filed on September 27, 2024 and titled "Optimal Fault-Tolerant Logical Pauli Measurements for qLDPC Codes", the entire contents of which are incorporated by reference herein in their entirety.

**BACKGROUND**

The present application generally relates to the field of fault-tolerant quantum computing, and in particular to quantum error correction (QEC).

In recent years, substantial research and development efforts have focused on leveraging the quantum properties of quantum systems for practical human applications. These quantum technologies are expected to become increasingly mainstream in the near future. Much of the interest in this field stems from the vast potential of quantum systems, particularly in quantum computing which may be utilized to provide enhanced speed and efficiency in areas such as cybersecurity, drug discovery and material science, logistics optimization, and financial modelling to name a few. However, tackling such problems could only be realized with a useful quantum computer.

However, quantum states of matter are notoriously fragile and highly susceptible to environmental noise that may cause quantum decoherence - the loss of quantum properties. To build useful quantum computers, they must be designed to be resilient against errors and this has inspired a field of research known as quantum error correction (QEC), which strives to help alleviate noise and deal with the difficulty of reliably controlling fragile quantum systems. Thus, QEC is believed to be a fundamental aspect of any large-scale fault-tolerant quantum computer. In recent years, there has been remarkable progress in realizing QEC codes on various hardware platforms. Within QEC, there has been ever-more-sophisticated theoretical progress in understanding how to suppress errors more quickly, with fewer resources, and to a greater degree.

One of the most promising approaches to QEC for a useful fault-tolerant large scale quantum computer is to encode the information using stabilizer codes, in which one measures parity-check operators that give partial information about errors that may have occurred on the physical qubits of the code. However, in a realistic physical environment, the act of measuring the parity-check operators is itself a noisy process. In many hardware platforms, the noise associated with measuring a parity check scales with the weight of the check, which is defined as the number of qubits that the check acts on non-trivially. The higher check weights generally correspond to deeper measurement circuits. In addition, the number of checks in which a qubit participates, known as qubit degree, is also associated with higher error as the noise in one qubit could be percolated to multiple checks. Hence, one way to find practically useful stabilizer codes is to search for stabilizer codes with low-weight parity-checks and qubit degrees, which are known as quantum low-density parity-check (qLDPC) codes.

Unlike other types of codes like two-dimensional topological codes, qLDPC codes do not suffer from the same bounds relating their size, distance, and rate, allowing for the design of qLDPC codes that require significantly less overhead at the expense of some degree of long-range connectivity. Photonics platforms allow for flexibility of connectivity since components of the quantum processor can be connected via optical fibers, thus they are an ideal match for qLDPC codes. The optical nature of the photonic qubits also makes measurement-based quantum computing a natural choice. In some photonic architectures such as continuous variable photonics platforms, the effective noise experienced by a qubit scales with the number and weight of stabilizers in which the qubit participates. Further, the dominant source of noise in this architecture is photon loss, and this physical source of noise operates seamlessly with assumptions of fault-tolerance.

A key aspect of a useful algorithm in such a quantum platform is the ability to perform logical Pauli measurements. Clifford gates can be implemented using joint logical Pauli measurements alongside the ability to prepare fault-tolerantly encoded Pauli eigenstates. Additionally, having access to some encoded non-Clifford states is sufficient to achieve a universal gate set. Known methods of performing Pauli measurement include homomorphic logical measurements, generalized lattice surgery, and Calderbank-Shor-Steane (CSS) code surgery. However, even though homomorphic logical measurements as described in "Homomorphic Logical Measurements" by Huang et al, PRX Quantum 4, 030301 (2023) and generalized lattice surgery as described in "Low-overhead fault-tolerant quantum computing using long-range connectivity" by Cohen et al, Science Advances 8, eabn1717 (2022) (*"Cohen"*), the disclosures of both are incorporated herein by reference in their entireties, may maintain qLDPC properties of the codes they act on, both approaches require a large additional overhead scaling at least quadratically with the distance. CSS code surgery as described in "CSS code surgery as a universal construction" by Cowtan and Burton, Quantum 8, 1344 (2024), the disclosure of which is incorporated herein by reference in its entirety, cannot guarantee fault-tolerance, as well as being limited to measuring CSS logical Pauli operators.

Thus, there remains a need for an improved method of performing Pauli measurements for qLDPC codes.

## SUMMARY OF THE INVENTION

In one aspect, the present disclosure is directed to a framework for performing Pauli measurements for qLDPC codes in the context of quantum error correction (QEC). In at least one aspect, the present disclosure is directed to a method of measuring logical Pauli operators encoded within CSS stabilizer codes. The method may be applicable for measuring any multiqubit logical Pauli operator with the number of additional physical qubits scaling linearly with the weight of the logical operator being measured. Given a code with a logical operator to measure, the method presented herein may provide a fault-tolerant method of extending the code while including the logical operator in the stabilizer group.

According to a first example aspect, there is a method of performing fault-tolerant logical measurements on a quantum computer comprising: receiving a quantum code comprising of a plurality of qubits and a logical operator of one or more of a first Pauli type and a second Pauli type having support on a subset of the plurality of qubits, the quantum code is defined, at least in part, by a first check matrix representing a first set of parity checks of the first Pauli type and a second check matrix representing a second set of parity checks of the second Pauli type; determining a hypergraph state representative of the quantum code from the plurality of qubits, the first check matrix, and second check matrix; determining, based on the hypergraph state, a chain map having a first component and a second component that provides mapping between a first chain complex C derived from the first and second check matrices to a second chain complex A, and a first linear transformation and a second linear transformation that maps the second chain complex A; constructing a third check matrix of the first Pauli type and a fourth check matrix of the second Pauli type from the chain map and the first and second linear transformations, the third check matrix representing a third set of parity checks of the first Pauli type that generates same or equivalent homological measurement results as the first set of parity checks and the fourth check matrix representing a fourth set of parity checks of the second Pauli type that generates same or equivalent homological measurement results as the second set of parity checks; preparing, on a quantum computer, a plurality of ancillary qubits in support of the third set of parity checks of the first Pauli type and the fourth set of parity checks of the second Pauli type; and performing one or more homological measurements on the plurality of ancillary qubits.

According to a second example aspect, there is a system for performing fault-tolerant logical measurements comprising: a classical processor configured to: receive a quantum code comprising of a plurality of qubits and a logical operator of one or more of a first Pauli type and a second Pauli type having support on a subset of the plurality of qubits, the quantum code is defined, at least in part, by a first check matrix representing a first set of parity checks of the first Pauli type and a second check matrix representing a second set of parity checks of the second Pauli type; determine a hypergraph state representative of the quantum code from the plurality of qubits, the first check matrix, and second check matrix; determine, based on the hypergraph state, a chain map having a first component and a second component that provides mapping between a first chain complex C derived from the first and second check matrices to a second chain complex A, and a first linear transformation and a second linear transformation that maps the second chain complex A; construct a third check matrix of the first Pauli type and a fourth check matrix of the second Pauli type from the chain map and the first and second linear transformations, the third check matrix representing a third set of parity checks of the first Pauli type that generates same or equivalent homological measurement results as the first set of parity checks and the fourth check matrix representing a fourth set of parity checks of the second Pauli type that generates same or equivalent homological measurement results as the second set of parity checks; a quantum processor configured to prepare a plurality of ancillary qubits in support of the third set of parity checks of the first Pauli type and the fourth set of parity checks of the second Pauli type; and one or more measurement components configured to perform one or more homological measurements on the plurality of ancillary qubits.

In any of the above aspects, wherein the determining of the hypergraph states may further comprise: determining a first chain map component $f_1$ based on the plurality of qubits, the first chain map component $f_1$ identifies a subset of the plurality of qubits in support of the logical operator; and estimating an intermediary linear transformation from the first chain map component $f_1$ and the second check matrix, the intermediary linear transformation is representative of an edge-vertex incidence matrix of the hypergraph state.

In any of the above aspects, the determining of the hypergraph state may further comprise: determining a resource metric of the hypergraph state; determining, when the resource metric is below a threshold value, a set of hypergraph state edges that would implement the hypergraph state having a resource metric equal to or greater than the threshold value.

In any of the above aspects, the resource metric may be a Cheeger constant.

In any of the above aspects, the threshold value may be a Cheeger constant value of 1.

In any of the above aspects, the determining of the chain map and the first and second linear transformations may further comprise: determining a second chain map component $f_0$, the first chain map component and the second chain map component provide mapping between one or more vector spaces of the first chain complex C and on one or more vector spaces of the second chain complex A; determining a first linear transformation $\partial_1$ from the second check matrix and the first chain map component $f_1$; determining a second linear transformation $\partial_0$ from the first linear transformation $\partial_1$, the first and second linear transformations enable transformation between vector spaces of the second chain complex A; and

determining a first component of the chain map based on the first linear transformation $\partial_1$ and the first chain map component $f_1$ and a second component of the chain map based on the second linear transformation and the second chain map component.

In any of the above aspects, the determining of the first linear transformation $\partial_1$ may further comprise removing redundant rows and rows of zeroes from the product of the second check matrix and the first chain map component $f_1$.

In any of the above aspects, the determining of the second linear transformation $\partial_0$ may further comprise defining the second linear transformation $\partial_0$ such that the kernel of the second linear transformation $\partial_0$ is isomorphic to the image of the first linear transformation $\partial_1$.

In any of the above aspects, the determining of the second chain map component $f_0$ may further comprise defining $f_0$ to be the removal of redundant and rows of zeroes, such that the second chain map component $f_0$ maps the first linear transformation $\partial_1$ to the product of the second check matrix and the first chain map component $f_1$.

In any of the above aspects, the removal of redundant rows may further comprise: reducing weight of the cone code by replacing each row of the first linear transformation $\partial_1$ having a weight greater than two by two or more weight-two rows.

In any of the above aspects, the defining of $f_0$ may further comprise replacing each column of the second chain map component $f_0$ corresponding to the replaced rows of the second matrix $\partial_1$ with two or more copies of the column.

In any of the above aspects, the constructing of the third check matrix of the first Pauli type may further comprise defining the third check matrix of the first Pauli type based on the first check matrix of the first Pauli type, the first chain map component $f_1$ and the first linear transformation $\partial_1$.

In any of the above aspects, the constructing of the fourth check matrix of the second Pauli type may further comprise defining the fourth check matrix of the second Pauli type based on the second check matrix of the second Pauli type, the second chain map component $f_0$ and the second linear transformation $\partial_0$.

In any of the above aspects, the quantum code may be a Calderbank-Shor-Steane (CSS) code.

In any of the above aspects, the CSS code may be a low-density parity check (LDPC) code.

Any of the above aspects may further comprise: initializing one or more ancilla qubits based on the plurality of qubits; measuring one or more stabilizers of the first Pauli type defined by the third check matrix; measuring one or more stabilizers of the second Pauli type defined by the fourth check matrix; performing error correction on the one or more ancilla qubits by measuring the one or more stabilizers of the first and second Pauli types a plurality of times; measuring the error corrected ancilla qubits to recover the quantum code.

In any of the above aspects, the logical operator of the second Pauli type may anticommute with the logical operator of the first Pauli type.

In any of the above aspects, the quantum code may be used for qubit decoding with a qubit decoder in the quantum processor.

In any of the above aspects, the qubit decoder may be a belief propagation (BP)-ordered statistics decoder (OSD).

## BRIEF DESCRIPTION OF THE DRAWINGS

Reference will now be made, by way of example, to the accompanying figures which show example embodiments of the present application, and in which:

FIG. 1 illustrates a flowchart of a method for performing fault-tolerant logical measurements on a quantum computer in accordance with some aspects of the present disclosure.;

FIG. 2 illustrates a pseudocode of an exemplary greedy algorithm in accordance with the present disclosure to optimize the set of hypergraph state edges to achieve a Cheeger constant of 1;

FIG. 3(a)-(d) illustrates a hypothetical example demonstrating the application of Algorithm 1 in FIG. 2 to achieve a Cheeger constant of 1;

FIG. 4 illustrates a pseudocode of an exemplary Algorithm 2 for determining $\partial_0$ by randomly searching possible choices of $\partial_0$ for low weight options;

FIG. 5(a) illustrates cycle graph of a hypothetical weight-8 X-logical operator with 8 vertices;

FIG. 5(b) illustrates the resulting cycle graph after applying Algorithm 1 from FIG. 2 to the operator in FIG. 5(a);

FIG. 5(c) illustrates the resulting cycle graph of the operator in FIG. 5 after cellulation.

FIG. 6 illustrates a flowchart of an implementation method of a fault tolerant protocol for performing homological measurements on a quantum computing device;

FIG. 7 illustrates the pseudocode of an exemplary Algorithm 3 for a homological measurement method in accordance with the present disclosure;

FIG. 8(a) illustrate the Tanner graph of a Steane code of the logical X operator supported on the first three (bolded) qubits;

FIG. 8(b) illustrates the restriction of $H_Z$ to the support of the logical operator to obtain $\partial_1$ of the code in FIG. 8(a);

FIG. 8(c) illustrates $f_1$, $f_0$, and $\partial_1$ of the code in FIG. 8(a) where the variable nodes with a dashed outline represent ancilla;

FIG. 9 illustrates a simplified block diagram of an example embodiment of a system 900 capable of performing homological measurements in accordance with the present disclosure;

FIG. 10 illustrates the simulation results of the logical block error rate for lifted codes LP1 and LP2 using method described herein as well as known methods from Cohen et al and Cross et al; and

FIG. 11 illustrates the simulation results of the logical block error rate of the hypergraph product codes HGP1 and HGP2 using the method described herein as well as known methods from Cohen et al and Cross et al.

Like reference numerals are used throughout the Figures to denote similar elements and features. While aspects of the invention will be described in conjunction with the illustrated embodiments, it will be understood that it is not intended to limit the invention to such embodiments.

## DETAILED DESCRIPTION OF EXAMPLE EMBODIMENTS

To better appreciate one or more aspects of the present disclosure, introductions to notations, definitions, and general overview of certain concepts pertaining to graph theory, homological algebra, and chain complexes are provided herein.

Graph Theory

Based on graph theory, a hypergraph generalizes a graph so that "edges" may be defined as arbitrary subsets of a vertex set. As Definition 1, a hypergraph $G(V, E)$ is given by a vertex set V and an edge set $E \subseteq P(V)$ contained in the power set of V.

Further according to graph theory, graphs and hypergraphs are mostly given by incidence matrices. As Definition 2, an edge-vertex incidence matrix M for a (hyper)graph $G(V, E)$ is a $|E| \times |V|$ matrix where rows represent edges and columns represent vertices given by [1]

$$M_{i,j} = \begin{cases} 1 & v_j \in e_i \\ 0 & otherwise. \end{cases} \tag{1}$$

In the present disclosure, when the term "incidence matrix" is used without qualification, it is intended to refer to the edge-vertex incidence matrix. Edges are allowed to repeat such that the edge set E could be a multiset, and correspondingly, the incidence matrix could have multiple identical rows.

In the present disclosure uses the following generation to hypergraphs for the Cheeger constant. Definition 3: consider the incidence matrix V of a (hyper)graph $G(V, E)$. The boundary of S c V is:

$$\partial S = \{e \in E \mid |e \cap S| \; is \; odd\} \tag{2}$$

Then the Cheeger constant is given by:

$$h(G) = min\left\{\frac{|\partial S|}{|S|} \mid S \subset V, |S| \leq \frac{|V|}{2}\right\}$$

$$= min\left\{\frac{wt(Mv)}{wt(v)} \mid wt(v) \leq \frac{|V|}{2}\right\} \qquad (3)$$

It is noted that the above definition matches the general definition for graphs. Further, if the same matrix M is instead interpreted as a biadjacency matrix for a Tanner graph where rows represent checks and columns represents variables, this matches the Cheeger constant definition in "Linear-Size Ancilla Systems for Logical Measurement in QLDPC Codes", (202x) by A. Cross et. al., arXiv:2407.18393 [quant-ph] ("*Cross*"), the disclosure of which is incorporated herein by reference in its entirety.

Lastly, as Definition 4, if M is an incidence matrix, then a cycle basis is given by the rows of any full-rank matrix N such that $ker\,N \cong im\,M.$ The matrix N can be seen as a cycle-edge incidence matrix where the edge given by the i-th row of M is given by the i-th column of N, and a row of N defines the edges of a cycle in the cycle basis.

Homological Algebra

In some embodiments, homological algebra can be used to describe features of CSS codes and operations on CSS codes.

A chain complex C is an ordered sequence of finite dimensional vector spaces $\{C_i\}$ over $F_2$ with linear transformations between consecutive spaces, $\partial_{i+1}: C_{i+1} \to C_i$, such that $\partial_i \circ \partial_{i+1} = 0$:

$$C : \cdots \to C_{i+1} \xrightarrow{\partial_{i+1}} C_i \xrightarrow{\partial_i} C_{i-1} \to \cdots \,[2]$$

For chain complexes with a finite number of vector spaces, e.g. for indices m, m + 1,$\cdots$ ,*n:*

$$C : C_n \xrightarrow{\partial_n} \cdots \xrightarrow{\partial_{m+2}} C_{m+1} \xrightarrow{\partial_{m+1}} C_m.\,[3]$$

A chain complex with *l* spaces is called an *l*-term chain complex. Since $\partial_i \circ \partial_{i+1} = 0$, it is provided that $im\,(\partial_{i+1}) \subseteq ker\,(\partial_i)$. The i-th homology group is defined as $H_i(C) = ker\,(\partial_i)\,/\,im\,(\partial_{i+1})$. In order to determine the homology groups for a chain with a finite number of terms, assume that any unspecified spaces are the trivial space 0 with trivial maps. In the present disclosure, the symbol H is also used to denote parity-check and check matrices but the usage is clear from context. The dual of a chain complex *C* is a the cochain complex *C\**:

$$C^* : \cdots \leftarrow C_{i+1}^* \xleftarrow{\delta_i} C_i^* \xleftarrow{\delta_{i-1}} C_{i-1}^* \leftarrow \cdots [4]$$

where $C_i^*$ is the space of all linear functionals on $C_i$. Note that $C_i^* \cong C_i$ since only finite dimensional vector spaces are considered. The corresponding dual of the homology groups are the cohomology groups $H_i(C) = ker\,\delta_i/\,im\,\delta_{i-1}$. It is assumed that vector spaces and their duals are equipped with the standard basis so that, when viewed as matrices, $\delta_{i-1}^T = \partial_i$ .

A chain complex is said to be *exact* at $C_i$ if $im\,(\partial_{i+1}) = ker\,(\partial_i)$ and is said to be an *exact sequence* if it is exact at each $C_i$. An exact sequence of the form $0 \to X \to Y \to Z \to 0$ is called a *short exact sequence* (SES). Any exact sequence with more than three nontrivial spaces is called a *long exact sequence* (LES).

Assume that $0 \to V_1 \to \cdots \to V_r \to 0$ is an exact sequence of finite dimensional vector spaces. Then

$$\sum_{i=1}^{r} (-1)^i dim V_i = 0. \qquad (4)$$

Equation (4) is a generalization of the rank-nullity theorem.

Consider two chain complexes *A* and C and maps $f_i : A_i \to C_i$ linking them:

$$\begin{array}{ccccccc}
\mathcal{A}: & \cdots \longrightarrow & A_i & \xrightarrow{\partial_i^{\mathcal{A}}} & A_{i-1} & \longrightarrow & \cdots \\
f\downarrow & & \downarrow f_i & & \downarrow f_{i-1} & & \\
\mathcal{C}: & \cdots \longrightarrow & C_i & \xrightarrow{\partial_i^{\mathcal{C}}} & C_{i-1} & \longrightarrow & \cdots
\end{array}$$

$$(5)$$

When $\partial_i^C\big(f_i(a)\big) = f_{i-1}\big(\partial_i^A(a)\big)$ for all $a \in A_i$, the maps $f_i$ are collectively referred to as a *chain map f: A →*

C.[5] The *mapping cone* of *f* is defined to be the chain complex with spaces *cone(f)$_i$* = $C_i \oplus A_{i-1}$ and maps $\partial_i^{cone(f)}$: *cone(f)$_i$*

→ *cone(f)$_{i-1}$*

$$\begin{array}{ccc}
A_{i-1} & \xrightarrow{\partial_{i-1}^{\mathcal{A}}} & A_{i-2} \\
\oplus & \searrow^{f_{i-1}} & \oplus \\
C_i & \xrightarrow{\partial_i^{\mathcal{C}}} & C_{i-1}
\end{array}$$

$$\mathrm{cone}(f)_i \xrightarrow{\partial_i^{\mathbf{cone}(f)}} \mathrm{cone}(f)_{i-1}$$

$$\partial_i^{\mathrm{cone}(f)} = \begin{array}{c} \\ C_{i-1} \\ A_{i-2} \end{array}\begin{array}{c} C_i \quad A_{i-1} \\ \begin{pmatrix} \partial_i^{\mathcal{C}} & -f_{i-1} \\ 0 & -\partial_{i-1}^{\mathcal{A}} \end{pmatrix} \end{array}.$$

$$(6)$$

For chain complexes over $F_2$, the negative signs in the map above in Equation (6) may be omitted.
The mapping cone provides the SES: [6]

$$0 \to C_k \xrightarrow{\iota} cone(f)_k \xrightarrow{\pi} A_{k-1} \to 0 \qquad (7)$$

for all indices *k* where $\iota$ is inclusion and $\pi$ is projection. Applying the Snake Lemma as described in "An introduction to homological algebra" by C. A. Weibel, Cambridge Studies in Advanced Mathematics No. 38 (Cambridge university press, Cambridge, 1994), the disclosure of which is incorporated herein in its entirety, with the chain map f as the connecting map, the following LES on homology where $f_*, \iota_{*~*}, and \pi_*$ are maps derived from *f,* $\iota$ *, and* $\pi$:

$$\cdots \xrightarrow{\iota_*} H_{k+1}\big(\mathrm{cone}(f)\big) \xrightarrow{\pi_*} H_k(\mathcal{A})$$
$$\xrightarrow{f_*}$$
$$H_k(\mathcal{C}) \xrightarrow{\iota_*} H_k(\mathrm{cone}(f)) \xrightarrow{\pi_*} \cdots$$

$$(8)$$

The sequence from Equation (8) enables the derivation of logical operators that remain after logical measurements are conducted via the mapping cone.

<u>Codes and Chain Complexes</u>

A natural correspondence exists between codes and chain complexes. For example, let $H \in F_2^{n-k \times n}$ be a parity-check matrix of an [*n, k, d*] (classical) linear code, where *n* is the number of variables, *k* is the dimension, and d is the distance. Then the code may be expressed as:

$$F_2^n \xrightarrow{H} F_2^{n-k}, \tag{9}$$

which vacuously satisfies the definition of a chain complex. Conversely, any chain complex with only one map gives a classical linear code.

Consider an $[\![n, k, d]\!]$ CSS code, where $d_X$ is defined as the minimum weight of nontrivial X-logical operators and $d_Z$ is defined as the minimum weight of nontrivial Z-logical operators. Then $n$ is the number of physical qubits, $k$ is the number of logical qubits, and $d = min\{d_X, d_Z\}$ is the distance. A CSS code $CSS(H_X, H_Z)$ can be generated by $n_X$ X-stabilizer generators, not necessarily independent, given by rows of the matrix $H_X$ and $n_Z$ Z-stabilizer generators given by rows of $H_Z$. Since $H_Z H_X^T = 0$, this may be treated as a chain complex: [7]

$$F_2^{n_X} \xrightarrow{H_X^T} F_2^n \xrightarrow{H_Z} F_2^{n_Z} \tag{10}$$

with the qubits represented by the center vector space of the chain complex. Conversely, a CSS code may be derived from any two consecutive boundary maps $\partial_{i+1}$ and $\partial_i$ by setting $H_X^T = \partial_{i+1}$ and $H_Z = \partial_i$. The X-logical operators are in $ker\ H_Z$ and hence commute with the Z stabilizers. Since the X-logical operators are not in in $im\ H_X^T$, they are not X stabilizers, which make them nontrivial elements of the first homology group $H_1$. The dual of Equation (10) gives the cochain [8]

$$F_2^{n_X} \xleftarrow{H_X} F_2^n \xleftarrow{H_Z^T} F_2^{n_Z}, \tag{11}$$

which implies that the Z logicals are given by the first cohomology group $H_1$. Since Equations (10) and (11) of the CSS code are duals of each other, Equation (11) may also be seen as the chain with Equation (10) as its cochain. In the present disclosure, Equation (10) is treated as the chain complex at least because this is more naturally suited for measurement of X-logical operators.

Since CSS codes and 3-term chain complexes are equivalent, new codes may be created using mapping cones.

By way of an example, consider a chain map $f: A \to C$, where $f$ includes components $f_0$ and $f_1$, $C$ is the chain complex $\left| C_2 \xrightarrow{H_X^T} C_1 \xrightarrow{H_Z} C_0 \right|$ [9] given by a CSS code, and $A$ is a chain complex $\left| A_1 \xrightarrow{\partial_1} A_0 \xrightarrow{\partial_0} A_{-1} \right|$ [10]. The cone code of f is given by:

$$
\begin{array}{ccccc}
A_1 & \xrightarrow{\partial_1} & A_0 & \xrightarrow{\partial_0} & A_{-1} \\
\oplus & \searrow^{f_1} & \oplus & \searrow^{f_0} & \oplus \\
C_2 & \xrightarrow[H_X^T]{} & C_1 & \xrightarrow[H_Z]{} & C_0
\end{array}
\tag{12}
$$

which has stabilizer matrices: [11]

$$\widetilde{H}_X = \begin{pmatrix} H_X & \\ f_1^T & \partial_1^T \end{pmatrix}, \quad \widetilde{H}_Z = \begin{pmatrix} H_Z & f_0 \\ & \partial_0 \end{pmatrix}. \tag{13}$$

As may be observed from above, the cone code in the form of $cone(f)_i = C_i \oplus A_{i-1}$ has two portions as expressed in Equation (12) - a first portion that maps $A_0$ to $C_1$ and a second portion that maps $A_{-1}$ to $C_0$. Each cone code portion further comprises two components, a linear transformation $\partial$ between vector spaces of chain map $A$ (i.e. $\left| A_i \xrightarrow{\partial_i} A_{i+1} \right|$ [12]) and a chain map $f$ from $A_{i+1}$ to $C_{i+1}$.

Homological Measurement

In one of its aspects, the present disclosure provides a method of performing Pauli measurement via implementation of homological measurements based on the chain complex description of CSS codes. Homological measurement hinges on the fact that a CSS code C can naturally be described by a chain complex of length 2, which comprises 3 vector spaces. One of the 3 vector spaces represents the physical qubits of the system, while the other 2 spaces represent the X and Z syndrome spaces. Linear maps connecting these spaces, called boundary maps, are given by the X and Z type check matrices as shown in Equation (10).

Since CSS codes can be described by chain complexes, homological algebra can be used to describe features of CSS codes and operations on CSS codes. For example, logical operators are given by elements of the homology and cohomology groups of the chain complex, and mapping cones applied to chain maps between chain complexes can provide new CSS codes.

The implementation of homological measurement in accordance with the present disclosure creates an ancillary quantum code that can also be described via a chain complex $A$ and a chain map $f$ from $A$ to CSS code $C$ as best shown in Equation (5) above. A new CSS code is then available via the chain complex resulting from the mapping cone of $f$. Some logical operators of the code C are in the stabilizer group of this new code, determined via homological algebra. Hence, by formulating the chain complex A and chain map f, a system to perform logical Pauli operator measurements for arbitrary CSS qLDPC codes with fewer resources than previous methods may be realized. Additionally, by exploiting edge expansion of a graph structure implied by the chain complex A, referred to as edge expanded homological measurement herein, code distance may be maintained which provides fault-tolerance with much smaller ancillary systems compared to previous methods.

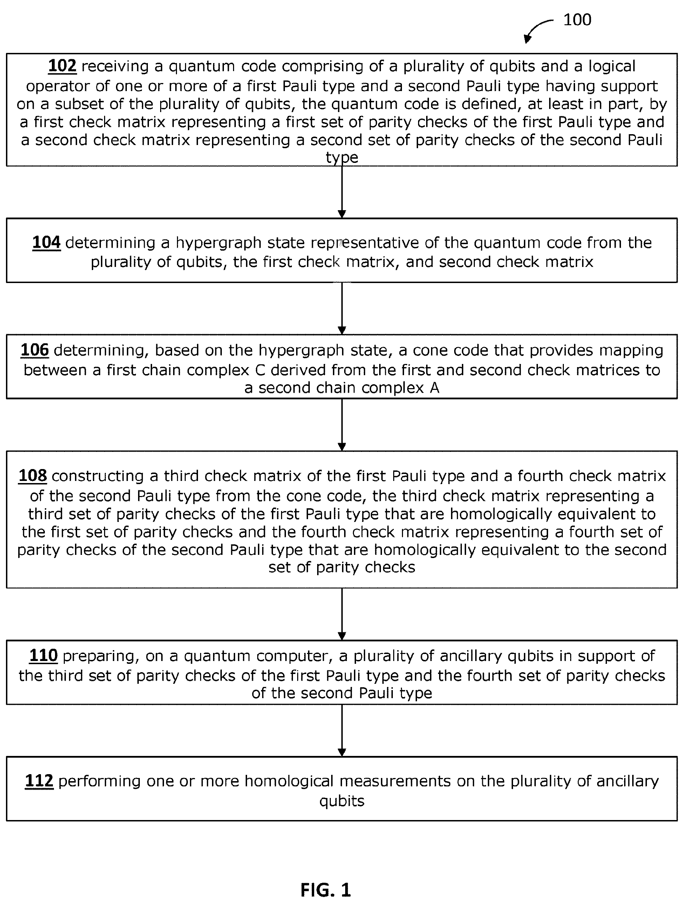

FIG. 1 illustrates a flowchart of a method 100 for performing fault-tolerant logical measurements on a quantum computer in accordance with some aspects of the present disclosure.

In embodiments based on a photonic quantum architecture, photonic states are formed, or stitched, into a lattice structure to facilitate a specific encoding scheme. qLDPC codes that are used to construct the higher dimensional lattice structure in some embodiments could significantly reduce the overhead required for fault-tolerant quantum computation. Most of the widely studied qLDPC codes belong to the class of CSS codes, which are a particular class of error correcting codes that use stabilizer generators of only X-operators or only Z-operators. In other words, CSS codes are capable of performing bit-flip error correction and phase-flip error correction separately. Thus, in some embodiments, the correlations between bit-flip and phase-flip errors may be neglected and bit-flip and phase-flip error correction may be performed independently of one another using the parity check matrices $H_Z$ and $H_X$ of the quantum code, respectively. The check matrix H of CSS codes may be expressed in the form:

$$H = \begin{bmatrix} H_X & 0 \\ 0 & H_Z \end{bmatrix}.[13]$$

qLDPC codes are characterized as having sparse check matrices, which have a low density of 1's. This corresponds to both the number of qubits in each stabilizer and the number of stabilizer measurements acting on a qubit being bounded above by a small constant value independent of code size. Code size refers to the code length, i.e., the number of qubits in the quantum error correction code. Hence, decoders can leverage the sparse nature of the check matrices to improve computational efficiency. Examples of qLDPC codes include surface codes and color codes. Note that a code can be both a CSS code and a qLDPC code. The two are not mutually exclusive, and CSS qLDPC codes are of particular interest in quantum error correction research.

At step 102, a quantum code and a logical Pauli operator are received. The quantum code is comprised of a plurality of qubits and is defined by check matrices $H_X$ and $H_Z$. The check matrices $H_X$ and $H_Z$ contain a set of X-type and a set of Z-type parity checks, respectively. In some embodiments, the quantum code C is a CSS code defined by check matrices $H_X$ and $H_Z$. The logical operator may be of X-type, Z-type, or both and has support on a subset of the plurality of qubits of the quantum code.

The input quantum code may be expressed as a chain complex: [14]

$$C : C_2 \xrightarrow{H_X^T} C_1 \xrightarrow{H_Z} C_0 \tag{14}$$

An ancillary CSS code with linear transformations $\partial_1^T$ and $\partial_0$ so that the ancillary CSS code may be defined and expressed as the chain complex: [15]

$$A: A_1 \overset{\partial_1}{\to} A_0 \overset{\partial_0}{\to} A_{-1}, \qquad\qquad (15)$$

and a chain map $f: A \to C$. The following notation is used: [16]

$$cone(f) = \tilde{C}: \quad \tilde{C}_2 \overset{\tilde{H}_X^T}{\to} \tilde{C}_1 \overset{\tilde{H}_Z}{\to} \tilde{C}_0 \qquad\qquad (16)$$

for the cone code of $f$.

It may be observed that, as a subsystem code, $| \dim H_1(\tilde{C}) = \tilde{k} + \tilde{r}$ [17] where $\tilde{k}$ is the number of logical qubits and $\tilde{r}$ is the number of gauge qubits. Applying the rank nullity theorem expressed in Equation (4) to the long exact sequence of Equation (8) for $\tilde{C}$, and treating any of the non-trivial operators of the cone code that arise from $A$ as gauges, the following expressions for $\tilde{k}$ and $\tilde{r}$ may be derived:

$$\tilde{k} = k + \left( \dim\ker \tilde{H}_X^T - \dim\ker H_X^T \right) - \dim\ker \partial_1 \qquad\qquad (17)$$

[18][19]

$$\tilde{r} = \dim\left( \frac{\ker \partial_0}{\operatorname{im} \partial_1} \right) + \left( \dim\ker \tilde{H}_X^T - \dim\ker \partial_0^T \right) - \dim\ker H_X^T \qquad\qquad (18)$$

The term $\left( \dim\ker \tilde{H}_X^T - \dim\ker H_X^T \right)$ measures the amount of [20]redundancy of the X-stabilizer generators in $\tilde{C}$ that were not directly copied from $C$. Lemma 1 below shows that this remaining redundancy is isomorphic to a subspace of $\ker \partial_1$ and that the remaining elements of $\ker \partial_1$ contribute to reduction in $\tilde{k}$. It is noted that Equation (18) mirrors Equation (17) in that the roles of $A$ and $C$ are swapped and the roles of $X$ and $Z$ swapped, noting in particular that the number of logical qubits in $A$ is $\dim (\ker \partial_0 / \operatorname{im} \partial_1)$ [21]. When applying a cone code construction to measure logical operators as described herein, the reduction of $\tilde{k}$ corresponds to the measurement of a logical operator.

Lemma 1 pertains to the characterization of the kernel of the linear transformation $\partial_1$, $\ker \partial_1$ [22]. Lemma 1 states that given a CSS code $C = CSS(H_X, H_Z)$ conceptualized as a chain complex $C: C_2 \overset{H_X^T}{\to} C_1 \overset{H_Z}{\to} C_0$ [23], a chain complex $A: A_1 \overset{\partial_1}{\to} A_0 \overset{\partial_0}{\to} A_{-1}$ [24], and a chain map $f: A \to C$ in the form of: [25]

$$\ker \partial_1 \cong S \oplus L \qquad\qquad (19)$$

Where $S$ is the space of X-stabilizers of $C$ that can be measured via the new stabilizer generators of $\tilde{H}_X$ and L is the space of nontrivial X-logical operators of C that can be measured via the new stabilizer generators of $\tilde{H}_X$. Effectively, Lemma 1 above demonstrates the embodiments of the present disclosure does not measure extra logical operators when enforcing $\dim\ker \partial_1 = 1$. [26]

At step 104, a hypergraph state representative of the quantum code is constructed from the quantum code qubits and check matrices $H_X$ and $H_Z$.

The chain map component $f_1$ in Equations (5) and (12) is chosen. Given a quantum code $C = CSS(H_X, H_Z)$ that is an $[\![n, k, d = (d_X, d_Z)]\!]$ CSS code, let $Q$ be the qubits in the support of the X-type logical operator $X$ expressed as $Q = \operatorname{supp} \underline{X} = \{q_1, ..., q_w\}$. The chain map component $f_1$ is to be an $n \times w$ matrix in the form of:

$$(f_1)_{i,j} = \delta_{i,q_j} \qquad\qquad (20)$$

Where qubit labels are ordered (i.e. $q_i < q_{i+1}$), and $w$ is the weight of the logical operator $w = |Q|$. In other words, the first chain map $f_1$ identifies the subset of the plurality of qubits that are in support of the logical operator $\underline{X}$. Note that the derivations contained herein may be applied *mutatis mutandis* for logical operators of Z-type by swapping the roles of X and Z.

By choosing a $\partial_1$ with even weight rows, then the sum of the new X-stabilizers given by the rows ( $f_1^T \partial_1^T$ ) from Equation (13) would be ($\underline{X}$ 0 ) as desired. This choice of $f_1$ requires $f_0$ and $\partial_1$ to be chosen such that:

$$f_0 \partial_1 = H_Z f_1 = H_Z|_Q \qquad\qquad (21)$$

so that $f$ is a valid chain map (equivalently, to enforce commutativity of the stabilizer matrices in Equation (13)). The notation $H_Z|_Q$ means $H_Z$ restricted to the columns given by the qubits $Q$. From Equation (21), it can be observed that all rows of $H_Z|_Q$ must be in the row space of $\partial_1$. Further, in order to have a sparse choice of $f_0$, it should require fewer rows of $\partial_1$ to generate rows of $H_Z|_Q$, and rows of $\partial_1$ should not be re-used many times to represent different rows of $H_Z|_Q$. Thus, when constructing the stabilizer code, the sparsity of $\partial_0$ should also be considered.

An intermediary linear transformation $\partial^*$ is determined from the chain map component $f_1$ and the second check matrix $H_Z$, where the intermediary linear transformation $\partial^*$ is interpreted as an edge-vertex incidence matrix that at least in part defines the hypergraph. The intermediary linear transformation $\partial^*$ is defined to be the $n_Z' \times w$ matrix obtained by restricting the second check matrix $H_Z$ to the columns of $Q$ by removing redundant rows followed by multiplying with the chain map component $f_1$ and by removing zero rows from the resulting matrix where $n_Z'$ is the number of non-zero rows:

$$\partial^* = H_Z|_Q^{n_z} \qquad\qquad (22)$$

In some embodiments, the hypergraph state yielded by the intermediary linear $\partial^*$ may be insufficient to meet one or more resource metric criteria. In some embodiments, the resource metric may be a Cheeger constant, which is indicative of the connectivity of the vertices in the graph. The hypergraph state derived from the intermediary linear transformation $\partial^*$ is only guaranteed to preserve the X-distance of the original code $C$ when the hypergraph has a Cheeger constant of 1 or higher. Given its implication on resource requirement, a Cheeger constant of 1 may be indicative of optimal connectivity of the graph state without unnecessary redundancy (i.e. Cheeger constant > 1) or bottleneck in graph connectivity (i.e. Cheeger constant < 1). Thus, if the hypergraph state generated from the intermediary linear transformation $\partial^*$ fails to yield a Cheeger constant of 1 then optional steps may be performed to generate a revised set of hypergraph state edges from $H_X$ and $H_Z$ that would increase the resulting Cheeger constant of the corresponding hypergraph to 1. The Cheeger constant is strictly positive if and only if a graph is a connected graph, which necessarily satisfies $dim\ ker\ \partial_1 = 1$ [27]. Hence, according to Lemma 1, only the desired operator will be measured. A small but positive Cheeger constant implies there exist two "large" sets of vertices with "few" links (edges) between them.

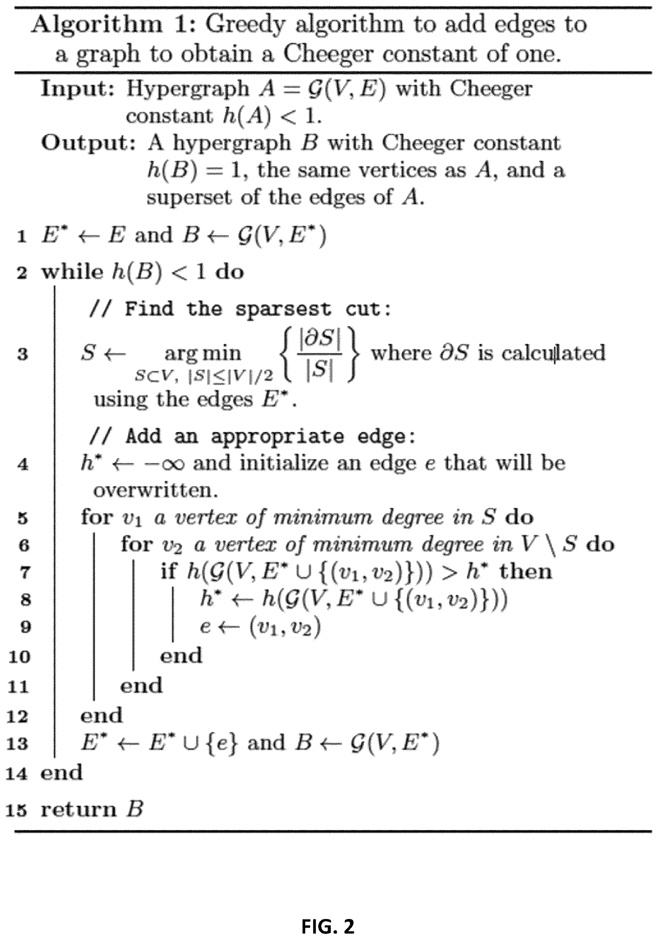

FIG. 2 illustrates the pseudocode of an exemplary greedy algorithm in accordance with the present disclosure to optimize the set of hypergraph state edges to achieve a Cheeger constant of 1. Algorithm 1 takes the set of vertices V and set of edges E of a hypergraph $A = G(V, E)$ that has a Cheeger constant $h(A)$ of less than 1, and outputs a revised hypergraph $B$ with a Cheeger constant $h(B) = 1$ where hypergraph B comprises the same vertices V as A and a superset of its edges.

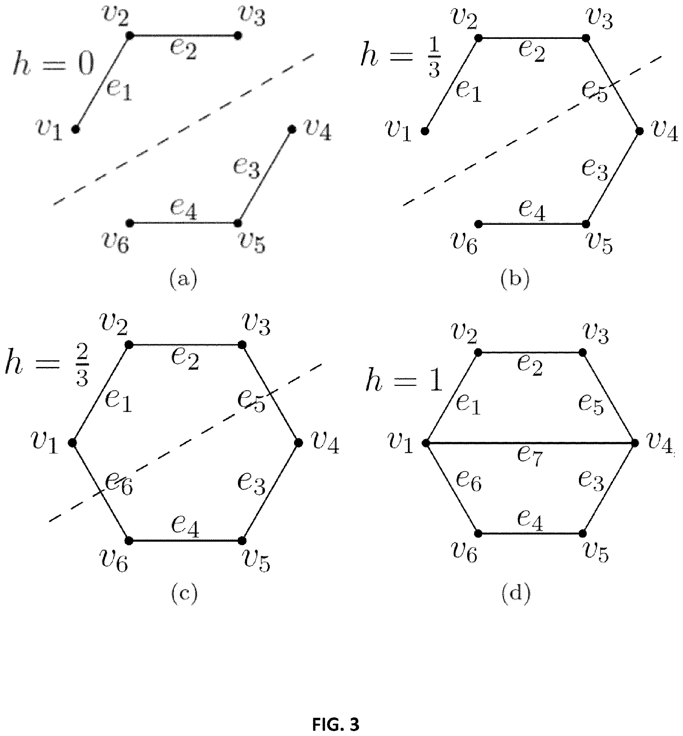

At a high level, Algorithm 1 may be conceptualized as determining, for every vertex, whether forming an edge with another unconnected vertex would increase the overall Cheeger constant. If so, a connection is made. This is repeated until the overall Cheeger constant of the hypergraph reaches 1. Application of Algorithm 1 in FIG. 2 to a hypothetical example is shown in FIG. 3(a)-(d).

At step 3 of Algorithm 1, the sparsest cut of a current hypergraph is determined. The cut effectively separates the vertices into two disjointed groups such that there is the least number of edges crossing the cut as compared to the size of the smaller of the two disjoint groups. In the example shown in FIG. 3(a), the initial starting hypergraph yields a Cheeger constant of 0 and the sparsest cut as indicated by the dashed line separates the vertices into two groups ($v_1, v_2, v_3$ and $v_4, v_5, v_6$) with no adjoining edges crossing the cut. Then, in Steps 4 to 12 of Algorithm 1, vertices of a minimum degree, or in other words, vertices with the least number of edges connected to it, are iteratively connected to another vertex with an additional edge. If the resulting configuration improves its Cheeger constant, then the current hypergraph is updated with the new edge. This is repeated until the Cheeger constant reaches the desired threshold value of 1. In FIGS. 3(b)-(c), new edges $e_5$ and $e_6$ are successively added to improve the Cheeger constant value to 1/3 and 2/3, respectively. Then in FIG. 3(d), edge $e_7$ connecting vertices $v_1$ and $v_4$ is made to improve the Cheeger constant to 1, and the original vertex set, and the revised superset of the edges are returned.

As the hypergraph state edge set is updated, the resulting linear transformation $\partial_1$ is modified concurrently so that the final $\partial^*$ is effectively the same as $\partial_1$. The modifications to the intermediary linear transformation $\partial^*$ at each of the stages that correspond to FIG. 3(a)-(d) is shown herein matrix form:

$$\partial_1^{(a)} = \begin{pmatrix} 1 & 1 & & \\ & 1 & 1 & \\ & & 1 & 1 \\ & & & 1 & 1 \end{pmatrix}, \quad \partial_1^{(b)} = \begin{pmatrix} 1 & 1 & & \\ & 1 & 1 & \\ & & & 1 & 1 \\ & & & & 1 & 1 \\ & & & 1 & 1 \end{pmatrix},$$

$$\partial_1^{(c)} = \begin{pmatrix} 1 & 1 & & \\ & 1 & 1 & \\ & & 1 & 1 \\ & & & 1 & 1 \\ & & 1 & 1 \\ 1 & & & & 1 \end{pmatrix}, \quad \partial_1^{(d)} = \begin{pmatrix} 1 & 1 & & \\ & 1 & 1 & \\ & & 1 & 1 \\ & & & 1 & 1 \\ & & 1 & 1 \\ 1 & & & & 1 \\ 1 & & & 1 \end{pmatrix}.$$

Hence, $\partial_1^{(d)}$ from above is also the linear transformation $\partial_1$. Alternatively, if the initial hypergraph derived from the check matrices of the quantum code has a Cheeger constant of 1 or higher, then the intermediary linear transformation $\partial^*$ may serve as the linear transformation $\partial_1$.

Referring back to FIG. 1, at step 106, a cone code of the chain map $f$ that provides mapping between a first chain complex $C$, as derived from the first and second check matrices, and a second chain complex $A$ is determined. Recall that in order to determine the cone code of the chain map $f$ as expressed in Equation (12), both components of the chain map, namely $f_0$ and $f_1$, and both linear transformations $\partial_0$ and $\partial_1$ need to be determined. As chain map component $f_1$ and linear transformation $\partial_1$ have been determined at step 104, here at step 106, chain map component $f_0$ and linear transformation $\partial_0$ are determined. It should be noted that the delineation of the determinations of $f_0$, $f_1$, $\partial_0$, and $\partial_1$ between steps 104 and 106 as presented herein are conceptual in nature and may be arranged in other ways. For example, in some embodiments, all four components may be determined in what is deemed to be step 104, and step 106 is limited to the determination of the cone code only. In some further embodiments, all determinations of the four components may be delineated as part of step 106. Accordingly, the determination of $f_0$, $f_1$, $\partial_0$, and $\partial_1$ may be conceptualized as being parts of step 104 and 106 in any suitable manner based on criteria such as resource allocation, hardware implementation, and software implementation.

The chain map component $f_0$ maps the first linear transformation $\partial_1$ to the product of the second check matrix and the first chain map component $f_1$ and may be readily derived from Equation (21) where $f_0\partial_1 = H_Z f_1$.

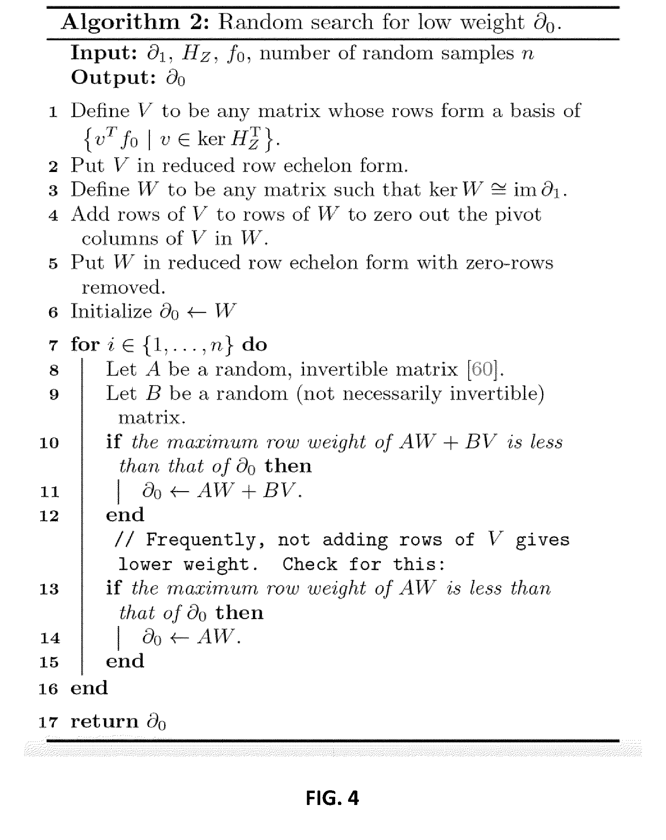

Upon obtaining a Cheeger constant of 1, such as by applying Algorithm 1, the linear transformation $\partial_0$ may be determined. In some embodiments, the most sparse option for $\partial_0$ is chosen among all matrices that satisfiy the condition of the kernel of the second linear transformation $\partial_0$ is isomorphic to the image of the first linear transformation $\partial_1$ (i.e. $ker\,\partial_0 \cong im\,\partial_1$). In other words, $\partial_0$ is chosen to represent a cycle basis for the hypergraph and $\partial_1$ is the edge-vertex incidence matrix of the hypergraph state as defined in Definition 4. In some embodiments, improvements to $\partial_0$ may be made when there are redundancies in the Z-stabilizer generators $H_Z$. Consider the space of row vectors $V = \{v^T f_0 | v \in ker\, H_Z^T \}$ [28] which are cycles that will be represented in $\tilde{H}_Z$ regardless of the choice of $\partial_0$. Thus, $\partial_0$ may be chosen such that the rows represent a basis for a subspace of all cycles W such that $V \oplus W$ is the entire cycle space of the hypergraph defined by $\partial_1$. FIG. 4 shows the pseudocode for an exemplary Algorithm 2 of a method for determining $\partial_0$ by randomly searching possible choices of $\partial_0$ (i.e. by randomizing matrices $A$ and $B$ in $AW + BV$ at lines 7 to 12 of Algorithm 2) for low weight options in accordance with the above.

There is no guarantee that the linear transformation $\partial_0$ will be sparse even for a qLDPC input code. Thus, in some embodiments, further optional steps may be performed prior to the application Algorithm 2 to improve the sparsity of $\partial_0$, or in other words to reduce the weight of the cone code. Optionally, starting with the incidence matrix $\partial_1^*$ as defined in Equation (22) before Algorithm 1 is applied, all edges of the hypergraph that are defined on more than two vertices (i.e. having a weight greater than 2) are replaced with any collection of edges defined only on two vertices (i.e. having a weight of 2) each such that all vertices of the original edge are represented. For an edge defined on v vertices, it suffices to choose v/2 edges for the replacement. The choice of these v/2 edges should be a positive integer value and made such that the Cheeger constant is kept as high as possible. As can be appreciated, at least two edges would be required to replace any edge having weight of 3 or more (more than 2). Representing all vertices from the original edges is necessary so that the row space of $\partial_1^*$ still includes $H_Z|_Q$ as required by Equation (21), and $f_0$ is modified to satisfy Equation (21) by replacing each column corresponding to an expanded hyperedge on v vertices with v/2 copies of that column. Similarly, at least two or more copies are needed to correspond with the changes in $\partial_1$. At this point, Algorithm 1 may be applied to obtain a $\partial_1^*$ corresponding to a graph with only weight-two edges and a Cheeger constant of 1. It is noted that other weight thresholds may be chosen, although having a weight of more than 2 may lead to a less than optimal hypergraph.

The determination of $\partial_0$ allows identification of the cycles defined by the rows of $\partial_0$. In cases where no low-weight cycle basis can be identified, a process called cellulation may be performed such that edges are added across vertices inside of large cycles to create multiple smaller cycles, thus reducing the weight of $\partial_0$. For example, in FIG. 3(d), an edge connecting vertices $v_1$ and $v_4$ creates two smaller cycles as opposed to one long cycle in FIG. 3(c). In one exemplary embodiment of cellulation, rows of the linear transformation $\partial_0$ are iterated through. For each row of $\partial_0$ that has a weight higher than a target value, new edges are added (by adding rows of $\partial_1$, along with corresponding zero-columns of $f_0$) within the cycle defined by the current row of $\partial_0$ to break it into smaller cycles. This results in replacing the high weight row with multiple lower weight rows corresponding to the new cycles.

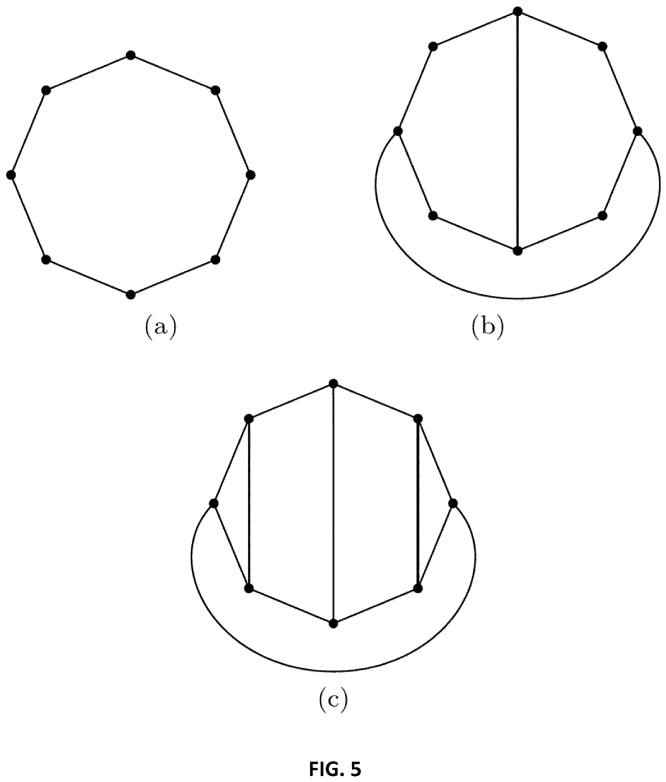

In a further example, given a hypothetical weight-8 X-logical operator where the initial $\partial_1^*$ obtained from Equation (22) provides a cycle graph with 8 vertices as shown in FIG. 5(a) which has a Cheeger constant of ½. A construction in accordance with prior art methods, such as the one described in *Cross,* would generate 24 ancilla qubits and a weight-8 Z-stabilizer corresponding to the weight of the single cycle in this graph. Other construction methods, such as those described in *Cohen,* does not create any new stabilizers above weight 4, but requires 120 ancilla qubits. In comparison, construction in accordance with methods described in the present disclosure may result in 10 ancilla qubits without cellulation and 12 with cellulation with maximum stabilizer weights of 5. Specifically, in accordance with the present disclosure, application of Algorithm 1 may add two edges resulting in FIG. 5(b) which increases the Cheeger constant to 1. There is a cycle basis with 3 cycles of weight 5 which is identifiable due to the graph being planar, which result in 3 stabilizers of weight 5. For concreteness, given a particular ordering of qubits and stabilizers of the original code, this would result in the following $\partial_1$ and $\partial_0$:

$$\partial_1 = \begin{pmatrix} 1 & 1 & & & & & & & \\ & 1 & 1 & & & & & & \\ & & 1 & 1 & & & & & \\ & & & 1 & 1 & & & & \\ & & & & 1 & 1 & & & \\ & & & & & 1 & 1 & & \\ & & & & & & 1 & 1 & \\ 1 & & & & & & & & 1 \\ 1 & & & & 1 & & & & \\ & & 1 & & & & & 1 & \end{pmatrix},$$

$$\partial_0 = \begin{pmatrix} 1 & 1 & 1 & 1 & & & & & 1 & \\ & & & 1 & 1 & 1 & 1 & & & 1 \\ & & & & & 1 & 1 & 1 & 1 & 1 \end{pmatrix}.$$

The weight of the above $\partial_0$ may be further improved through cellulation. Since we are measuring an X operator, each new X-stabilizer is given by a vertex of the graph, and the weight of the new X-stabilizer associated with a vertex is one more than the vertex degree. Therefore, in some embodiments, when choosing a cellulation to try to reduce weight 5 operators, any choices that increase the vertex weights beyond 3 may be avoided. This trade-off between the weights in $\partial_1$ and $\partial_0$ is a general feature of cellulation. Given this, the most reasonable cellulation choice is shown in FIG. 5(c) where the weight of two of the three cycles shown in FIG. 5(b) has been cellulated, resulting in just a single weight 5 cycle. For the same particular ordering of qubits and stabilizers in the above matrices, this gives the following modified $\partial_1$ and $\partial_0$:

$$\partial_1 = \begin{pmatrix} 1 & 1 & & & & & & & \\ & 1 & 1 & & & & & & \\ & & 1 & 1 & & & & & \\ & & & 1 & 1 & & & & \\ & & & & 1 & 1 & & & \\ & & & & & 1 & 1 & & \\ 1 & & & & & & & & 1 \\ 1 & & & & & 1 & & & \\ & 1 & & & & & 1 & & \\ & 1 & & 1 & & & & & \\ & & & & & & 1 & & 1 \end{pmatrix},$$

$$\partial_0 = \begin{pmatrix} 1 & & 1 & & & 1 & & 1 & \\ & 1 & 1 & & & & & & 1 \\ & & 1 & & 1 & & & 1 & 1 \\ & & & 1 & 1 & & & & 1 \\ & & & & 1 & 1 & 1 & 1 & \end{pmatrix}.$$

At step 108, updated check matrices $\tilde{H}_X$ of the first Pauli type and check matrix $\tilde{H}_Z$ of the second Pauli type are determined from the cone code based on Equation (13). The check matrix $\tilde{H}_X$ represents a third set of parity checks of the first Pauli type, where a homological measurement on $\tilde{H}_X$ is equivalent to or obtains the same results as performing the homological measurement on the original check matrix $H_X$. Similarly, the check matrix $\tilde{H}_Z$ represents another set of parity checks of the second Pauli type that yields equivalent or the same homological measurement results as the second set of parity checks.

At step 110, a plurality of ancillary qubits in support of the parity checks of the first Pauli type in $\tilde{H}_X$ and the fourth set of parity checks of the second Pauli type $\tilde{H}_Z$ are prepared in a plurality of quantum registers of a quantum computer.

At step 112, one or more homological measurements are performed on the plurality of ancillary qubits. The measurement outcomes of the ancillas are indicative of the impact of original check matrices $H_X$ and $H_Z$ on operator X in a fault tolerant manner that is more resource efficient than the generalized lattice surgery approach described in *Cohen*.

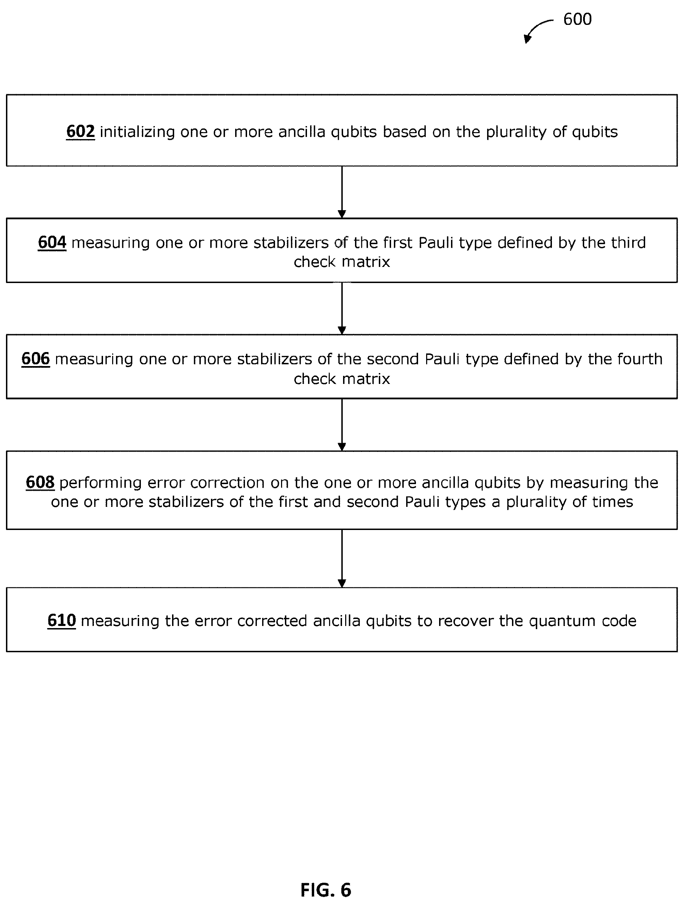

FIG. 6 shows a flowchart 600 of an implementation method of a fault tolerant protocol for performing homological measurements on a quantum computing device corresponding to steps 110 and 112. The implementation may be applicable to any homological measurement, and not just edge expanded homological measurements.

At 602, one or more ancillas are initialized as copies of the received qubits. On a quantum computing device, for example at a source generation module, ancilla qubits $A_0$ in the $|0\rangle^{\oplus(dim\,A^0)}$[29] state for an *X* measurement (or, alternatively, $|+\rangle^{\oplus(dim\,A^0)}$[30] for a *Z* measurement) are prepared. At this point, the physical system is stabilized by:

$$H_X' = (H_X\ 0\ ),\ H_Z' = (H_Z\ I\ ). \qquad (23)$$

At 604, the each of the newly introduced X stabilizers from the rows ( $f_1^T\ \partial_1^T$ ) of $\tilde{H}_X$ are measured. The measurement results are uniformly random and stored. Since [31]

$$rowspace \begin{pmatrix} H_Z & \\ & I \end{pmatrix} = rowspace \begin{pmatrix} H_Z & f_0 \\ & I \end{pmatrix}, \qquad (24)$$

and the rows $(H_Z\,f_0\,)$ commute with the measurements by construction, only the rows $(0\,I\,)$ of the latter matrix anticommute and are replaced with $(0\,G\,)$, where the rows of $G$ generate the subspace that commute with $\partial_1^T$, i.e., G is a matrix such that $im\,\partial_1 = ker\,G \subseteq ker\,\partial_0$ [32]. The result is a physical system that is stabilized by: [33]

$$H_X' = \begin{pmatrix} H_X & \\ f_1^T & \partial_1^T \end{pmatrix},\ H_Z' = \begin{pmatrix} H_Z & f_0 \\ & G \end{pmatrix}, \qquad (25)$$

where the Z-stabilizer $(0\,\partial_0)$ are included in the row space of $(0\,G)$.

At 606, the Z-stabilizers $(H_Z\,f_0\,)$ are measured. In case where $rowspace(\partial_0) \subsetneq rowspace(G)$, the stabilizers in $rowspace(G) \setminus rowspace(\partial_0)$ may be treated as being fixed without measurement to avoid obtaining potentially high weight stabilizer generators.

At 608, error correction is performed on the ancilla qubits by measuring the stabilizers of cone code $C$ multiple times. While measuring the new stabilizers in $\tilde{H}_X$ gives random results since they anti commute with some existing Z-type stabilizers, their product gives the logical operator that is being measured. In the ideal case, that would be sufficient to infer the results of the logical measurement with certainty, but in the presence of errors the measurement of the stabilizers can be repeated over a sufficient amount of time. Typically, the number of times to repeat the measurement is equal to the distance of the initial code, and the results are fed into a decoder in order to infer with high confidence the outcome of the logical measurement. Since in general there are other logical qubits remaining in the code, this is also required to maintain their protection.

At 610, the error corrected ancilla qubits are measured to try to recover the original quantum code. In some embodiments, the ancillas are measured in the Z-basis, and the resulting measurement values are used to determine the resulting code space. In some further embodiments, the measurement is performed in a fault tolerant way in response to potential errors that may occur during measurement.

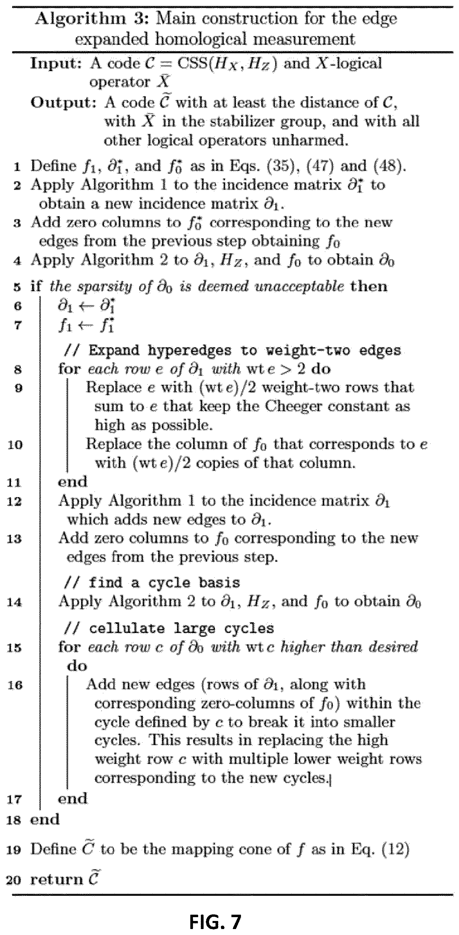

FIG. 7 shows the pseudocode of an exemplary Algorithm 3 for a homological measurement method in accordance with the present disclosure. One or more steps of Algorithm 3 may correspond to the steps of method 100 as described herein. Consider a $[\![7, 1, 3]\!]$ Steane code given by the following stabilizer matrices: [34]

$$H_X = H_Z = \begin{pmatrix} & & & 1 & 1 & 1 & 1 \\ & 1 & 1 & & & 1 & 1 \\ 1 & & 1 & & 1 & & 1 \end{pmatrix} \qquad (26)$$

Measuring the logical operator X = ( 1 1 1 0 0 0 0 ) via methods described herein, such as Algorithm 3, outputs the following stabilizer matrices:

$$\tilde{H}_X = \begin{pmatrix} H_X \\ f_1^{\mathrm{T}} & \partial_1^{\mathrm{T}} \end{pmatrix} = \begin{pmatrix} & & & 1 & 1 & 1 & 1 & & \\ & 1 & 1 & & & 1 & 1 & & \\ 1 & & 1 & & 1 & & 1 & & \\ \hline 1 & & & & & & & & 1 \\ & 1 & & & & & & 1 & \\ & & 1 & & & & & 1 & 1 \end{pmatrix}$$

$$\tilde{H}_Z = \begin{pmatrix} H_Z & f_0 \end{pmatrix} = \begin{pmatrix} & & & 1 & 1 & 1 & 1 & & \\ & 1 & 1 & & & 1 & 1 & 1 & \\ 1 & & 1 & & 1 & & 1 & & 1 \end{pmatrix}.$$

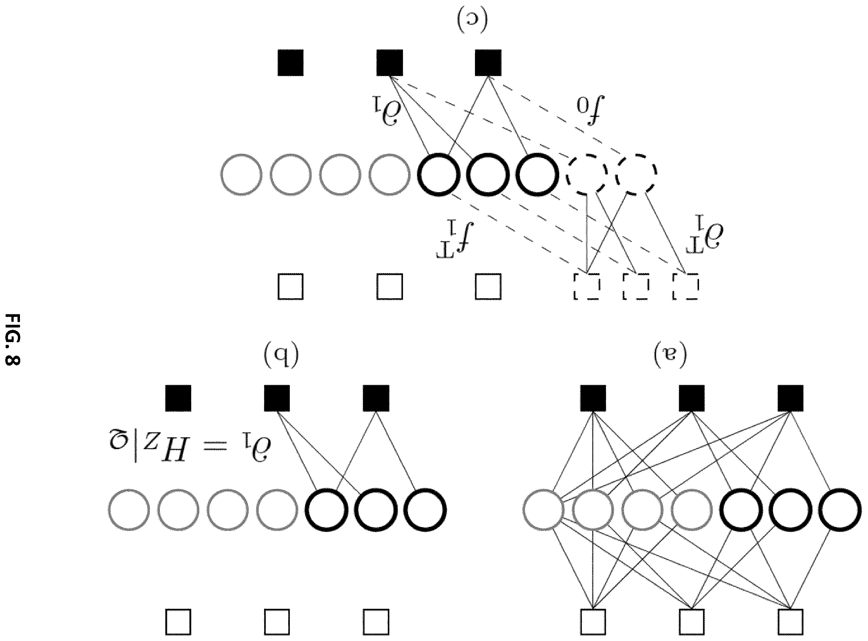

The above stabilizer matrices $\tilde{H}_X$ and $\tilde{H}_Z$ define a $[\![9, 0]\!]$ code. Notice that the last three rows of $\tilde{H}_X$ sum to $(\underline{X}\,0)$. Since $k$ drops to zero, there is no minimum distance to consider. FIG. 8 illustrates a Tanner graph representation of $\partial_1$, $f_1$, and $f_0$ for this example. Since there are no cycles in the graph given by $\partial_1$, $\partial_0$ is not shown in this example. The Tanner graph in FIG. 8(a) shows the original Steane code of the logical X operator supported on the first three (bolded) qubits. The restriction of to the support of the logical operator to obtain $\partial_1$ is shown in FIG. 8(b). In FIG. 8(c), $f_1$, $f_0$, and $\partial_1$ are shown where the variable nodes with a dashed outline represent ancilla.

Parallel measurement refers to independent measurements of multiple logical operators, as opposed to a single joint measurement. In certain embodiments, parallel measurements can be performed via iterative application of Algorithm 3. When a measurement of an X-type operator is performed, the remaining X-logical operators are unchanged, so the subsequent application of Algorithm 3 is straightforward. However, to measure an X-type and Z-type operator in parallel, after constructing the cone code for measurement of the X-type operator, the Z-type operator will have its support extended to some of the ancillas.

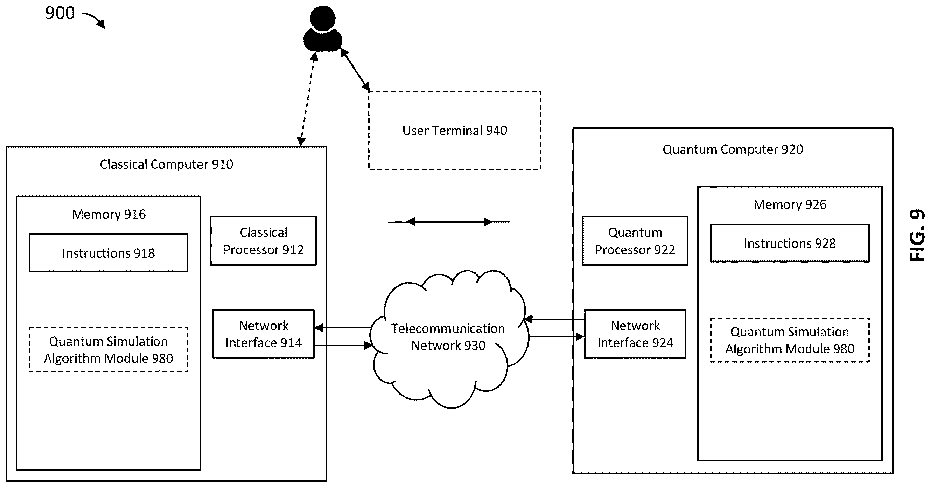

FIG. 9 is a simplified block diagram of an example embodiment of a system 900 capable of performing homological measurements in accordance with the present disclosure. As shown, system 900 is hybrid in nature and includes one or more classical computers 910 operably coupled to or in operable communication with one or more quantum computers 920 via a telecommunication network 930.

Each of the classical computer(s) 910 may act as a controller to the quantum computers 920. In some embodiments, the classical computing elements could be implemented as a classical control module within one or more of the quantum computers 920. In FIG. 9, the classical computers 910 may be configured to perform an initialization phase of the simulation as described in more detail herein. In some embodiments, each of the classical computers 910 may be, for example, a desktop terminal, a tablet computer, a notebook computer, a server, a cloud end, or any suitable processing system. Other classical computers suitable for implementing embodiments described in the present disclosure may be used, which may include components different from those discussed below. In some examples, the classical computer 910 may be implemented across more than one physical hardware unit, such as in a parallel computing, distributed computing, virtual server, or cloud computing configuration. Although FIG. 9 shows a single instance of each component of the classical computer 910, there may be multiple instances of each component shown.

As shown in FIG. 9, the classical computer 910 may include one or more classical processors 912, such as a central processing unit (CPU) with hardware accelerator, graphics processing unit (GPU), tensor processing unit (TPU), neural processing unit (NPU), microprocessor, digital signal processor, application-specific integrated circuit (ASIC), field-programmable gate array (FPGA), dedicated logic circuitry, dedicated artificial intelligence processor unit, or combinations thereof.

The one or more classical processors 912 are operably coupled to a network interface 914 for wired or wireless communication with the telecommunication network 930 (e.g., an intranet, the Internet, a P2P network, a Wide Area Network (WAN), and/or a Local Area Network (LAN)) to operably communicate with the quantum computers 920 and one or more optional user terminals 940. The network interface 914 may include wired links (e.g., Ethernet cable) and/or wireless links (e.g., one or more antennas) for intra-network and/or inter-network communications. One or more end users may interact with system 900, for example, by inputting a vibronic Hamiltonian describing a vibronic system through one or more user terminals 940 or, alternatively, inputting directly into the classical computer 910.

The classical computer 910 may also include one or more non-transitory memory(ies) 916 which may include a volatile or non-volatile memory (e.g., a flash memory, a random-access memory (RAM), and/or a read-only memory (ROM)). The non-transitory memory 916 may store instructions 918 for execution by the classical processors 912, for example, instructions to implement/execute a software-based quantum simulation algorithm module 980, in whole or in part, each of which is described in further detail below. Examples of non-transitory computer-readable media include a RAM, a ROM, an erasable programmable ROM (EPROM), an electrically erasable programmable ROM (EEPROM), a flash memory, a CD-ROM, or other portable memory storage.

Each of the quantum computer(s) 920 also includes a quantum processor 922 operably coupled to a memory 926 and a network interface 924 (which is also operably coupled to the memory 916). The memory 926 stores instructions 928 that are executable by the quantum processor 922. The instructions 928 can include, for example, instructions to implement / execute the software-based quantum simulation algorithm module 980, in whole or in part. The quantum computer 920 may be based on a suitable form of physical qubit, including superconducting qubits, photonic qubits, trapped-ion qubits, silicon-based qubits, and neutral atoms. The quantum processor 922 manipulates one of the physical properties of the input state by performing quantum operations such as preparing qubit registers and applying quantum logic gates. The quantum processor 922 may include one or more measurement components (e.g., homodyne detectors) configured to measure the output of the quantum processor 922 and provide information about the quantum result. The quantum computer 920 receives input to a quantum simulation process from classical computer 910 and/or user terminal 940 and returns simulation results.

As shown in FIG. 9, the system 900 can be conceptualized as including a quantum simulation algorithm module 980. The quantum simulation algorithm module 980 can be implemented in software, in hardware, or in a combination of software and hardware. The quantum simulation algorithm module 980 may be implemented in full or in part on one or both of the classical computer 910 and quantum computer 920, and hence the module is shown with dotted lines in both computers on FIG. 9. In some implementations, at least steps 110 and 112 of the method flowchart 100 in FIG. 1 are performed on a quantum computer, whereas one or more other steps of method 100, such as steps 102 to 108, may be performed on a classical (non-quantum) computer.

Joint Measurement of X-, Y-, and Z-logical Operators

In some embodiments, as opposed to measuring a logical operator in a single X- or Z-basis, it may be preferable to measure a logical operator $L$ that is a mixture of X-, Y-, and Z-logical operators. In such cases, the logical operator $L$ is expressed as a product of X- and Z-logical operators, including phases if required. In some embodiments, Algorithm 1 as described above is applied separately for $\underline{X}$ and $\underline{Z}$ obtaining $f_1^{(X)}$, $f_0^{(X)}$, and $\partial_1^{(X)}$ for $\underline{X}$ and $f_1^{(Z)}$, $f_0^{(Z)}$, and $\partial_1^{(Z)}$ for $\underline{Z}$ leading to the following matrices:

$$\widetilde{H}_X^{(first\ step)} = \begin{pmatrix} H_X & & f_0^{(Z)} \\ f_1^{(X)^T} & \partial_1^{(X)^T} & \end{pmatrix}$$

$$\widetilde{H}_Z^{(first\ step)} = \begin{pmatrix} H_Z & f_0^{(X)} & \\ f_1^{(Z)^T} & & \partial_1^{(Z)^T} \end{pmatrix}$$

Note that the roles of $H_X$ and $H_Z$ are swapped when measuring $\underline{Z}$.

There are two potential issues that may arise after this first step. Either the two matrices do not commute, or if they do, the code they implement could only measure $\underline{X}$ and $\underline{Z}$ separately. To address both issues, some pairs of stabilizers are merged by, for example, replacing stabilizer generators with their product. If the matrices anti-commute, then this may be due to stabilizer generators with a single overlapping qubit in the blocks $f_1^{(X)^T}$ and $f_1^{(Z)^T}$, corresponding to the physical Pauli-Y operators that are being measured. Then, each anticommuting pair of stabilizer generators may be merged. Alternatively, if the matrices commute, any X stabilizer from the rows starting with $f_1^{(X)^T}$ can be merged with any Z stabilizer from the rows starting with $f_1^{(Z)^T}$. In some embodiments, the lowest weight stabilizers are chosen to be merged to minimize weight increase as result of the merge. This results in a valid non-CSS stabilizer code given by the following stabilizer matrix in symplectic form where $f_1^{(X\backslash Z)}$, $f_1^{(Z\backslash X)}$, $\partial_1^{(X\backslash Z)}$, and $\partial_1^{(Z\backslash X)}$ are what remains after merging, and $f_1^{(Y|x)}$, $f_1^{(Y|z)}$, $\partial_1^{(Y|x)}$, and $\partial_1^{(Y|z)}$ are created according to the merging:

$$\left( \begin{array}{ccc|ccc} H_X & & f_0^{(Z)} & & & \\ f_1^{(X\backslash Z)^{\mathrm{T}}} & \partial_1^{(X\backslash Z)^{\mathrm{T}}} & & & & \\ f_1^{(Y|x)^{\mathrm{T}}} & \partial_1^{(Y|x)^{\mathrm{T}}} & & f_1^{(Y|z)^{\mathrm{T}}} & & \partial_1^{(Y|z)^{\mathrm{T}}} \\ & & & H_Z & f_0^{(X)} & \\ & & & f_1^{(Z\backslash X)^{\mathrm{T}}} & & \partial_1^{(Z\backslash X)^{\mathrm{T}}} \end{array} \right).$$

This code does include L in its stabilizer group, but it also contains new logical operators that may be low weight, which may give rise to the same issue that requires $\partial_0$ as described herein. To fix this, the cycle basis determination approach described herein may be applied. The new undesired logical operators are given by the cycles of a particular graph. This graph is given by the union of the graphs defined by $\partial_1^{(X)}$ and $\partial_1^{(Z)}$ with vertices between the two identified if their respective stabilizers were merged, i.e., the incidence matrix of the graph is [35]

$$\partial_1 = \begin{pmatrix} \partial_1^{(X\backslash Z)} & \partial_1^{(Y|x)} \\ & \partial_1^{(Y|z)} & \partial_1^{(Z\backslash X)} \end{pmatrix} \tag{27}$$

Find a cycle basis for the graph, such as by using Algorithm 2, which is notated as:

$$\partial_0 = \begin{pmatrix} \partial_0^{(X)} & \partial_0^{(Z)} \end{pmatrix}$$

where edges from the top block row in Equation (66) are represented in $\partial_0^{(X)}$ (alternatively, the bottom block represented in $\partial_0^{(Z)}$). If the row weights of $\partial_0$ are higher than desired, cellulation can be applied where one may choose for each added edge whether to include it in the graph for X or the graph for Z. The resulting code is given by the following stabilizer matrix in symplectic form:

$$
\left(
\begin{array}{ccc|ccc}
H_X & & f_0^{(Z)} & & & \\
f_1^{(X\backslash Z)^{\mathrm{T}}} & \partial_1^{(X\backslash Z)^{\mathrm{T}}} & & & & \\
f_1^{(Y|x)^{\mathrm{T}}} & \partial_1^{(Y|x)^{\mathrm{T}}} & & f_1^{(Y|z)^{\mathrm{T}}} & & \partial_1^{(Y|z)^{\mathrm{T}}} \\
& & & H_Z & f_0^{(X)} & \\
& & & f_1^{(Z\backslash X)^{\mathrm{T}}} & & \partial_1^{(Z\backslash X)^{\mathrm{T}}} \\
& & \partial_0^{(Z)} & & \partial_0^{(X)} & 
\end{array}
\right)
$$

The dimension of the resulting code is one less than that of the input code by construction, and the resulting distance is always preserved.

Examples and Simulations

This section presents the simulation data of the fault-tolerant logical operator measurement methodology in accordance with the present disclosure, and the benchmarking results against known methodologies.

Two classes of quantum LDPC codes are considered: (a) lifted product (LP) codes and (b) hypergraph product (HGP) codes. The focus on these particular code families is primarily due to: 1) their distances scale with n, 2) have constant encoding rate, and 3) perform well with the photonic architecture, although the methods presented herein can be used with any code. To demonstrate homological measurement through the examples presented herein, for each code, an X-logical operator for which the weight is equal to the distance of its code is considered, but they have been otherwise chosen randomly.

Lifted Product Code

The lifted product codes were first proposed by Panteleev and Kalachev in "Quantum LDPC Codes With Almost Linear Minimum Distance", IEEE Transactions on Information Theory 68, 213 (2022), the entire disclosure of which is incorporated herein. The lifted product code construction may be conceptualized as the lifted version of the hypergraph product code construction.

Given a choice of lift size $l$, consider the polynomial quotient ring $R_l = F_2[x]/(x^l - 1)$. For a polynomial $g(x) = g_0 + g_1 x + \cdots + g_{l-1} x^{l-1} \in R_l$, define $g^T(x) = g_0 + g_{l-1} x + \cdots + g_1 x^{l-1} \in R_l$. The lift of $g(x)$ is an $l \times l$ circulant matrix $B(g(x))$ where the first column is given by the coefficients of $g(x)$ and each subsequent column is obtained by a cyclic shifting down one index, i.e., the i-th column is given by the coefficients of $x^{i-1}g(x)$. Similarly, the lift $B(A)$ of a matrix $A$ over $R_l$ is obtained by replacing each element of $A$ by its lift.

Let $A_1$ and $A_2$ be two matrices of size $m_1 \times n_1$ and $m_2 \times n_2$, respectively, with entries in $R_l$. The quasi-cyclic lifted product code $LP(A1, A2)$ is the CSS code of length $l(n_1 m_2 + n_2 m_1)$ with stabilizer matrices $H_X = B([A_1 \otimes I \quad I \otimes A_2]), H_Z = B([I \otimes A_2^T \quad A_1^T \otimes I])$ .

In these simulations, the lifted product codes given by matrices $A_1 = A_2^T = A$ are chosen whose entries are monomials in $R_l$. The matrices are explicitly shown in Table I:

Table I: Matrices Defining the Lifted Product Codes Used for Simulations Hypergraph Product Codes

| LP Code | $\ell$ | Matrix over $R_\ell$ |
|---|---|---|
| $LP_1$ | 7 | $\begin{pmatrix} 1 & 1 & 1 & 1 \\ 1 & x & x^2 & x^5 \\ 1 & x^6 & x^3 & x \end{pmatrix}$ |
| $LP_2$ | 9 | $\begin{pmatrix} 1 & 1 & 1 & 1 \\ 1 & x & x^6 & x^7 \\ 1 & x^4 & x^5 & x^2 \end{pmatrix}$ |

The second class of codes used within the simulations are the hypergraph product codes as first proposed by Tillich and Zémor in " Quantum LDPC Codes With Positive Rate and Minimum Distance Proportional to the Square Root of the Blocklength", IEEE Transactions on Information Theory 60, 1193 (2014), the entire disclosure of which is incorporated herein. The Tanner graph of a hypergraph product code is constructed by taking the graph product of the Tanner graphs of two classical codes.

Consider classical codes $C_1$ and $C_2$, and their respective parity-check matrices $H_1$ and $H_2$. Let $C_i$ have parameters $[n_i, k_i, d_i]$. The transposed codes of $C_1$ is denoted by $C_i^T$ and has the parity-check matrix $H_i^T$ and parameters $[m_i, k_i^T, d_i^T]$. When $H_i^T$ is a full rank matrix, $C_i^T$ encodes no logical information and has infinite distance, i.e., $k_i^T = 0$ and $d_i^T = \infty$. The hypergraph product code of $C_1$ and $C_2$ is denoted $HGP(C_1, C_2)$ and has stabilizer matrices:

$$H_X = (H_1 \otimes I \qquad I \otimes H_2^T),$$

$$H_Z = (I \otimes H_Z \qquad H_1^T \otimes I),$$

and parameters:

$$[\![ n_1 n_2 + m_1 m_2, k_1 k_2 + k_1^T k_2^T, (d_1, d_2, d_1^T, d_2^T) ]\!]$$

The specific HGP codes considered in the simulation are built from $H = H_1 = H_2$, where $H$ is a parity-check matrix of a classical LDPC code with column weights of four (4) and row weights of three (3). These classical LDPC codes obtained using the MacKay-Neal method as described by MacKay and Neal in Electronics Letters 32, 1645, (1996), the entire disclosure of which is incorporated herein in its entirety. Two hypergraph product codes considered herein are denoted $HGP_1$ and $HGP_2$, given by the following parity-check matrices:

$$H_{\mathrm{HGP_1}} = \begin{pmatrix}
0&0&0&1&1&0&0&0&0&0&0&0&0&0&0&0&0&1&0&1\\
0&1&0&0&0&0&1&0&0&0&0&0&0&0&1&0&0&0&0&1\\
0&0&0&0&0&1&0&0&0&1&0&0&0&0&0&1&1&0&0&0\\
0&0&1&0&0&0&1&0&0&0&0&0&0&1&0&0&1&0&0&0\\
0&0&0&0&0&0&0&0&1&1&0&1&0&0&0&0&0&0&1&0\\
0&0&0&0&1&0&0&0&0&0&1&0&0&0&1&1&0&0&0&0\\
0&0&0&0&0&0&0&1&0&1&0&0&1&0&0&0&0&1&0&0\\
0&1&1&1&0&0&0&0&0&0&0&0&1&0&0&0&0&0&0&0\\
0&0&0&0&0&1&0&0&1&0&0&0&1&0&1&0&0&0&0&0\\
0&0&0&0&0&0&0&1&0&0&1&1&0&0&0&0&1&0&0&0\\
0&0&0&1&0&1&0&1&0&1&0&0&0&0&0&0&0&0&1&0\\
1&0&0&0&0&0&0&0&0&0&0&1&0&1&0&0&0&0&0&1\\
1&0&0&0&1&0&1&0&0&0&0&0&0&0&0&0&0&0&1&0\\
1&0&1&0&0&0&0&0&1&0&0&0&0&0&0&1&0&0&0&0\\
0&1&0&0&0&0&0&0&0&0&1&0&0&1&0&0&0&1&0&0
\end{pmatrix},$$

and

$$H_{\mathrm{HGP_2}} = \begin{pmatrix}
0&1&0&0&0&0&0&0&0&0&0&0&0&1&1&0&0&1&0&0&0&0&0\\
0&0&0&0&0&0&1&1&0&0&0&0&0&0&1&0&0&0&0&0&0&1&0\\
0&0&0&1&0&0&0&0&1&0&0&0&0&0&0&0&0&1&0&0&0&1\\
0&0&1&0&0&0&0&0&0&0&1&0&1&0&0&0&0&0&0&0&0&1\\
0&0&0&0&0&0&0&1&0&1&0&0&0&0&1&0&1&0&0&0&0&0\\
0&0&0&0&0&1&0&0&1&0&0&0&0&0&0&1&0&0&0&0&1&0\\
1&1&0&0&0&0&0&1&0&0&0&0&0&0&0&1&0&0&0&0&0&0\\
0&0&0&0&0&1&0&0&0&0&0&1&1&1&0&0&0&0&0&0&0&0\\
1&0&0&0&0&0&0&0&0&1&0&0&0&0&0&0&1&0&0&0&0&1\\
0&0&0&0&1&0&0&0&0&0&0&0&0&0&1&0&0&0&0&1&1&0\\
0&1&0&0&1&0&1&0&0&0&0&1&0&0&0&0&0&0&0&0&0&0\\
0&0&0&1&0&0&0&1&0&0&0&0&0&0&1&0&0&1&0&0&0&0\\
0&0&0&0&0&0&0&1&0&1&0&0&0&0&0&0&0&0&1&1&0&0\\
1&0&0&0&1&0&0&0&0&0&0&0&0&0&0&0&1&1&0&0&0\\
0&0&1&0&0&1&1&0&0&0&1&0&0&0&0&0&0&0&0&0&0&0\\
0&0&0&0&0&0&0&1&0&0&0&1&0&0&0&0&1&0&0&1&0&0\\
0&0&1&0&0&0&0&0&0&0&1&0&0&1&0&1&0&0&0&0&0&0\\
0&0&0&1&0&0&0&0&1&0&0&1&0&0&0&0&0&0&0&1&0&0&0
\end{pmatrix}$$

The logical operators measured using the methods described herein are shown in Table II:

TABLE II. Logical operators used for fault-tolerant logical measurement simulations.

| Code | Logical operator |
|---|---|
| $LP_1$ | $X_{30}X_{37}X_{38}X_{39}X_{44}X_{45}X_{47}X_{51}X_{53}X_{54}$ |
| $LP_2$ | $X_{41}X_{42}X_{53}X_{55}X_{56}X_{60}X_{62}X_{63}X_{64}X_{65}X_{68}X_{72}$ |
| $HGP_1$ | $X_{282}X_{286}X_{288}X_{290}X_{292}X_{293}|X_{298}X_{300}$ |
| $HGP_2$ | $X_{217}X_{219}X_{220}X_{222}X_{224}X_{225}X_{230}X_{232}X_{235}X_{237}$ |

The code parameters and row and column weights of the original codes are presented in Table III.

TABLE III. Properties of the simulated codes

| Code | $(q_X, w_X, q_Z, w_Z)$ | $(q, w)$ | $(q_{X_{avg}}, w_{X_{avg}}, q_{Z_{avg}}, w_{Z_{avg}})$ | $(q_{avg}, w_{avg})$ |
|---|---|---|---|---|
| $LP_1$, $[\![175, 19, 10]\!]$ | (4, 7, 4, 7) | (8, 7) | (3.36, 7, 3.36, 7) | (6.72, 7) |
| $LP_2$, $[\![225, 21, 12]\!]$ | (4, 7, 4, 7) | (8, 7) | (3.36, 7, 3.36, 7) | (6.72, 7) |
| $HGP_1$, $[\![625, 25, 8]\!]$ | (4, 7, 4, 7) | (8, 7) | (3.36, 7, 3.36, 7) | (6.72, 7) |
| $HGP_2$, $[\![900, 36, 10]\!]$ | (4, 7, 4, 7) | (8, 7) | (3.36, 7, 3.36, 7) | (6.72, 7) |

The code parameters and weights obtained post-measurements are presented in Table IV

TABLE IV. Properties of the codes obtained post fault-tolerant logical measurements.

| Original code | Measured code | $(\tilde{q}_X, \tilde{w}_X, \tilde{q}_Z, \tilde{w}_Z)$ | $(q, w)$ | $(\tilde{q}_{X_{avg}}, \tilde{w}_{X_{avg}}, \tilde{q}_{Z_{avg}}, \tilde{w}_{Z_{avg}})$ | $(\tilde{q}_{avg}, \tilde{w}_{avg})$ |
|---|---|---|---|---|---|
| $LP_1$, $[\![175, 19, 10]\!]$ | $[\![191, 18, 10]\!]$ | (4, 7, 6, 9) | (10, 9) | (3.31, 6.72, 3.39, 7.19) | (6.70, 6.95) |
| $LP_2$, $[\![225, 21, 12]\!]$ $[\![245, 20, 12]\!]$ | | (4, 7, +7, 12) | (9, 12) | (3.30, 6.73, 3.47, 7.34) | (6.77, 7.03) |
| $HGP_1$, $[\![625, 25, 8]\!]$ $[\![638, 24, 8]\!]$ | | (4, 7, 5, 8) | (9, 8) | (3.35, 6.94, 3.37, 7.03) | (6.72, 6.98) |
| $HGP_2$, $[\![900, 36, 10]\!]$ $[\![917, 35, 10]\!]$ | | (4, 7, 7, 11) | (9, 11) | (3.35, 6.94, 3.39, 7.06) | (6.73, 7.00) |

Numerical Simulation

The homological measurement method described herein is benchmarked for the various codes presented in lifted product codes $LP_1$ and $LP_2$ as well as hypergraph product codes $HGP_1$ and $HGP_2$ described above via simulation of a photonic architecture based on optical GKP states. The quantum code considered is first foliated (using a number of layers equal to the code distance) to give a cluster state. The cluster is generated, for example, by sending optical GKP qubits through a passive linear optics circuit comprising of beamsplitters and phase shifters, and homodyne measurements performed on a subset of the modes. The detailed description of the procedure used can be found in "Linear-optical quantum computation with arbitrary error-correcting codes" by Walshe et. al. (2024), arXiv:2408.04126 [quant-ph]. The photonic quantum computing architecture used for the simulations is as follows.

A GKP Bell pair is constructed using two GKP sensor states, a 50:50 beamsplitter, and a $\pi/2$ phase shifter. The generation of the GKP Bell pair is modelled by considering two modes in the ideal GKP sensor state, applying a Gaussian blurring channel of variance $\sigma^2$ that replaces each delta function of the GKP state by a Gaussian distribution of variance $\sigma^2$, and applying the optical circuit comprising of a 50:50 beamsplitter and a $\pi/2$ phase shifter. Here, the variance of the Gaussian is expressed in terms of decibels, $\frac{\sigma^2}{\sigma_{vac}^2} [dB] = -10(\sigma^2/\sigma_{vac}^2)$, where $\sigma_{vac}^2$ is the variance of the vacuum, which is ½ in units where $\hbar = 1$. This model is equivalent to uniform photon loss experienced throughout the cluster state generation and measurement process.

The optical resource state is obtained by considering the cluster state based on the foliated quantum code, replacing each edge of the cluster state by a GKP Bell pair, and applying a beamsplitter circuit on all the modes that correspond to the same node in the cluster state to obtain the resource state. The set of modes in various GKP Bell pairs corresponding to the same node in the cluster state are called a macronode. The beamsplitter circuit corresponds to performing a continuous-variable GHZ measurement.

The GKP cluster state is obtained from the optical resource state by performing a homodyne measurement on all but one mode in each macronode in the q-quadrature. Homodyne measurements in the p-quadrature are performed on the remaining mode in each macronode as the quantum computer is considered to be operating in quantum error correction mode. The quantum error correction mode involves performing X basis measurements on all qubits in the cluster state. To perform a Z basis measurement when the quantum computer is in another mode, the remaining mode in the macronode should be measured in the q-quadrature. It is noted that the qubit Pauli error rate of a qubit increases monotonically with variance $\sigma^2$ (decreases monotonically with $\frac{\sigma^2}{\sigma^2_{vac}}$ [$dB$] ) and the degree of the node in the cluster state.

The homodyne measurements are processed to obtain the GKP qubit measurement value in the GKP cluster state. This involves first processing measurement outcomes in the same mode in the macronode. Each processed measurement outcome is decoded using a soft-in soft-out GKP decoder, which is the binning function described in "Fault-Tolerant Quantum Computation with Static Linear Optics" by Izitrin et. al., PRX Quantum 2, 040353 (2021), the entire disclosure of which is incorporated herein, to obtain a bit value and a probability of error. Feedforward corrective displacements are needed to obtain the bit value and probability of error corresponding to the GKP qubits in the GKP cluster state. These are obtained by combining the bit values and probability of error of a particular mode of a macronode with a few modes of the macronode corresponding to its neighbors in the cluster state to obtain the qubit value and the probability of qubit error.

The syndrome is computed from these bit values and the qubit weight $w_q$ is computed from the probability of qubit error $p_q$ as $w_q = log((1 - p_q)/p_q)$. The syndrome and the qubit weights are used to perform soft-in hard-out qubit decoding using the foliated quantum code. A belief propagation (BP)-ordered statistics decoder (OSD) is used to perform qubit decoding.

As the homological measurement method described herein can be used across the class of quantum LDPC codes, the BP-OSD decoder is a suitable decoder scheme as it can be used with all quantum LDPC codes. The min-sum algorithm is used for BP decoding with N iterations and a flooding schedule, where N is the number of qubits in the foliated cluster state. When the BP decoding does not converge, an OSD may be used with combination sweep strategy with search depth parameter $\lambda = 60$.

Logical block error rate is used to quantify the performance of the homological measurement method as described herein encoded with the example codes before and after the homological measurements. Monte Carlo simulations are performed to obtain estimates of the logical error rate.

For the logical block error rate computation, a logical error is deemed to have occurred in a trial when any logical qubit has an error after decoding. Denoting the number of times at least a logical error occurs by $n_{fail}$ and $n_{tot}$ the total number of trials, using the Agresti-Coull interval, the logical block error rate is estimated by

$$p_{fail} = \frac{n_{fail} + \frac{k^2}{2}}{n_{tot} + k^2}$$

and the uncertainties are estimated by

$$k\sqrt{\frac{p_{fail}\left(1 - p_{fail}\right)}{n_{tot} + k^2}}$$

with $p_{fail}$ denoting the estimated probability of sustaining a logical block error, and where $k$, the desired quantile of a standard normal distribution, is set to $k = 1.96$ corresponding to a 95% confidence interval.

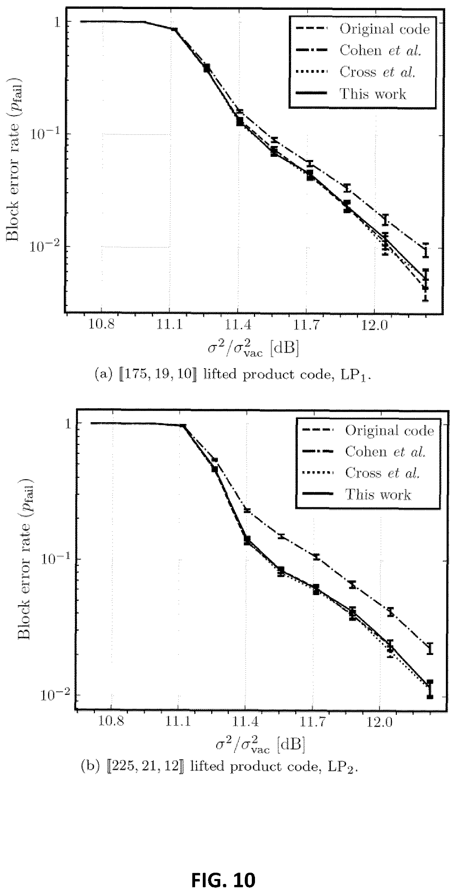

Figure 10(a) and (b) show the logical block error rate for the lifted product codes LP1 and LP2, respectively. As may be discerned from FIG. 10, the homological measurement method as described herein performs similarly to those presented in *Cohen* and *Cross* as identified herein while using a smaller number of additional ancilla qubits. Note that the block error rates are also similar to that of the original codes.

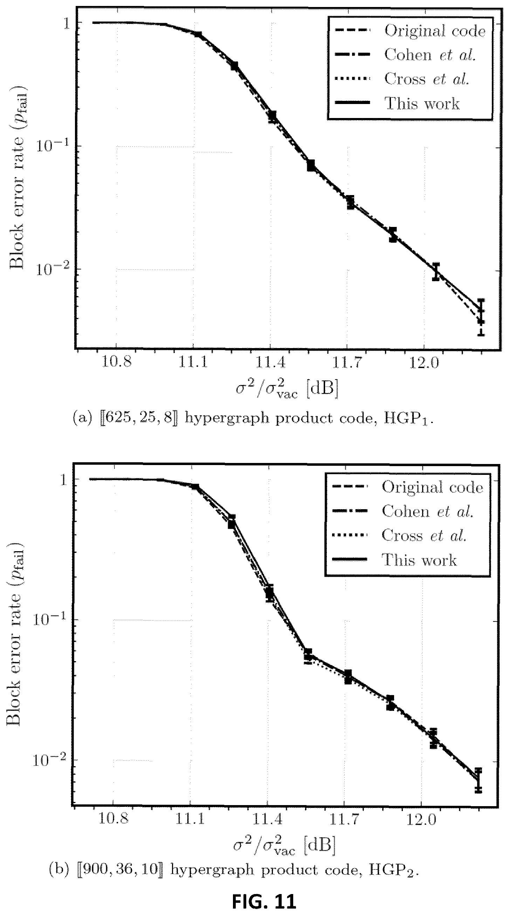

Figure 11(a) and (b) show the logical block error rate of the hypergraph product codes HGP1 and HGP2, respectively. For these codes, the homological measurement method described herein performs equivalently to the scheme presented in *Cross,* while outperforming generalized lattice surgery in *Cohen.* This may be due to the fact that the ancilla code used by generalized lattice surgery repeats a potentially bad structure d times that depends on the specific logical representative being measured, in combination with the fact that the ancilla code in this scheme is significantly larger than for the other protocols considered.

Although the present disclosure describes the photon number resolving method and system with respect to a two-pulse pulse train, it is understood that the disclosure may be extended to pulse trains with three or more pulses.

Although the present disclosure may describe methods and processes with steps in a certain order, one or more steps of the methods and processes may be omitted or altered as appropriate. One or more steps may take place in an order other than that in which they are described, as appropriate.

Although the present disclosure may be described, at least in part, in terms of methods, a person of ordinary skill in the art will understand that the present disclosure is also directed to the various components for performing at least some of the aspects and features of the described methods, be it by way of hardware components, software or any combination of the two. Accordingly, the technical solution of the present disclosure may be embodied in the form of a software product. A suitable software product may be stored in a pre-recorded storage device or other similar non-volatile or non-transitory computer readable medium, including DVDs, CD-ROMs, USB flash disk, a removable hard disk, or other storage media, for example. The software product includes instructions tangibly stored thereon that enable a processing device (e.g., a personal computer, a server, or a network device) to execute examples of the methods disclosed herein.

The present disclosure may be embodied in other specific forms without departing from the subject matter of the claims. The described example embodiments are to be considered in all respects as being only illustrative and not restrictive. Selected features from one or more of the above-described embodiments may be combined to create alternative embodiments not explicitly described, features suitable for such combinations being understood within the scope of this disclosure.

All values and sub-ranges within disclosed ranges are also disclosed. Also, although the systems, devices and processes disclosed and shown herein may comprise a specific number of elements/components, the systems, devices and assemblies could be modified to include additional or fewer of such elements/components. For example, although any of the elements/components disclosed may be referenced as being singular, the embodiments disclosed herein could be modified to include a plurality of such elements/components. The subject matter described herein intends to cover and embrace all suitable changes in technology.

**Claims**

1. A method of performing fault-tolerant logical measurements on a quantum computer comprising:

    receiving a quantum code comprising of a plurality of qubits and a logical operator of one or more of a first Pauli type and a second Pauli type having support on a subset of the plurality of qubits, the quantum code is defined, at least in part, by a first check matrix representing a first set of parity checks of the first Pauli type and a second check matrix representing a second set of parity checks of the second Pauli type;
    determining a hypergraph state representative of the quantum code from the plurality of qubits, the first check matrix, and second check matrix;
    determining, based on the hypergraph state, a chain map having a first component and a second component that provides mapping between a first chain complex C derived from the first and second check matrices to a second chain complex A, and a first linear transformation and a second linear transformation that maps the second chain complex *A;*
    constructing a third check matrix of the first Pauli type and a fourth check matrix of the second Pauli type from the chain map and the first and second linear transformations, the third check matrix representing a third set of parity checks of the first Pauli type that generates same or equivalent homological measurement results as the first set of parity checks and the fourth check matrix representing a fourth set of parity checks of the second Pauli type that generates same or equivalent homological measurement results as the second set of parity checks;
    preparing, on a quantum computer, a plurality of ancillary qubits in support of the third set of parity checks of the first Pauli type and the fourth set of parity checks of the second Pauli type; and
    performing one or more homological measurements on the plurality of ancillary qubits.

2. The method of claim 1, wherein the determining of the hypergraph states further comprises:

    determining a first chain map component $f_1$ based on the plurality of qubits, the first chain map component $f_1$ identifies a subset of the plurality of qubits in support of the logical operator; and
    estimating an intermediary linear transformation from the first chain map component $f_1$ and the second check matrix, the intermediary linear transformation is representative of an edge-vertex incidence matrix of the hypergraph state.

3. The method of claim 1, the determining of the hypergraph state further comprises:

    determining a resource metric of the hypergraph state;
    determining, when the resource metric is below a threshold value, a set of hypergraph state edges that would implement the hypergraph state having a resource metric equal to or greater than the threshold value.

4. The method of claim 3, wherein the resource metric is a Cheeger constant.

5. The method of claim 4, wherein the threshold value is a Cheeger constant value of 1.

6. The method of claim 2, wherein the determining of the chain map and the first and second linear transformations further comprises:

    determining a second chain map component $f_0$, the first chain map component and the second chain map component provide mapping between one or more vector spaces of the first chain complex C and on or more vector spaces of the second chain complex A;
    determining a first linear transformation $\partial_1$ from the second check matrix and the first chain map component $f_1$;
    determining a second linear transformation $\partial_0$ from the first linear transformation $\partial_1$, the first and second linear transformations enable transformation between vector spaces of the second chain complex A; and
    determining a first component of the chain map based on the first linear transformation $\partial_1$ and the first chain map component $f_1$ and a second component of the chain map based on the second linear transformation and the second chain map component.

7. The method of claim 2, wherein the determining of the first linear transformation $\partial_1$ further comprises removing redundant rows and rows of zeroes from the product of the second check matrix and the first chain map component $f_1$.

8. The method of claim 2, wherein the determining of the second linear transformation $\partial_0$ further comprises defining the second linear transformation $\partial_0$ such that the kernel of the second linear transformation $\partial_0$ is isomorphic to the image of the first linear transformation $\partial_1$.

9. The method of claim 6, wherein the determining of the second chain map component $f_0$ further comprises defining $f_0$ to be the removal of redundant and rows of zeroes, such that the second chain map component $f_0$ maps the first linear transformation $\partial_1$ to the product of the second check matrix and the first chain map component $f_1$.

10. The method of claim 7, wherein the removal of redundant rows further comprises: reducing weight of the cone code by replacing each row of the first linear transformation $\partial_1$ having a weight greater than two by two or more weight-two rows.

11. The method of claim 9, wherein the defining of $f_0$ further comprises replacing each column of the second chain map component $f_0$ corresponding to the replaced rows of the second matrix $\partial_1$ with two or more copies of the column.

12. The method of claim 1, wherein the constructing of the third check matrix of the first Pauli type further comprises defining the third check matrix of the first Pauli type based on the first check matrix of the first Pauli type, the first chain map component $f_1$ and the first linear transformation $\partial_1$.

13. The method of claim 1, wherein the constructing of the fourth check matrix of the second Pauli type further comprises defining the fourth check matrix of the second Pauli type based on the second check matrix of the second Pauli type, the second chain map component $f_0$ and the second linear transformation $\partial_0$.

14. The method of claim 1, wherein the quantum code is a Calderbank-Shor-Steane (CSS) code.

15. The method of claim 11, wherein the CSS code is a low-density parity check (LDPC) code.

16. The method of claim 1, further comprising:

initializing one or more ancilla qubits based on the plurality of qubits;
measuring one or more stabilizers of the first Pauli type defined by the third check matrix;
measuring one or more stabilizers of the second Pauli type defined by the fourth check matrix;
performing error correction on the one or more ancilla qubits by measuring the one or more stabilizers of the first and second Pauli types a plurality of times;
measuring the error corrected ancilla qubits to recover the quantum code.

17. The method of claim 1, wherein the logical operator of the second Pauli type anti-commutes with the logical operator of the first Pauli type.

18. A system for performing fault-tolerant logical measurements comprising:

   a classical processor configured to:

   receive a quantum code comprising of a plurality of qubits and a logical operator of one or more of a first Pauli type and a second Pauli type having support on a subset of the plurality of qubits, the quantum code is defined, at least in part, by a first check matrix representing a first set of parity checks of the first Pauli type and a second check matrix representing a second set of parity checks of the second Pauli type;
   determine a hypergraph state representative of the quantum code from the plurality of qubits, the first check matrix, and second check matrix;
   determine, based on the hypergraph state, a chain map having a first component and a second component that provides mapping between a first chain complex C derived from the first and second check matrices to a second chain complex A, and a first linear transformation and a second linear transformation that maps the second chain complex A;
   construct a third check matrix of the first Pauli type and a fourth check matrix of the second Pauli type from the chain map and the first and second linear transformations, the third check matrix representing a third set of parity checks of the first Pauli type that generates same or equivalent homological measurement results as the first set of parity checks and the fourth check matrix representing a fourth set of parity checks of the second Pauli type that generates same or equivalent homological measurement results as the second set of parity checks;

   a quantum processor configured to prepare a plurality of ancillary qubits in support of the third set of parity checks of the first Pauli type and the fourth set of parity checks of the second Pauli type; and
   one or more measurement components configured to perform one or more homological measurements on the plurality of ancillary qubits.

19. The system of claim 18, wherein the quantum code is used for qubit decoding with a qubit decoder in the quantum processor.

20. The system of claim 19, wherein the qubit decoder is a belief propagation (BP)-ordered statistics decoder (OSD).

100

**102** receiving a quantum code comprising of a plurality of qubits and a logical operator of one or more of a first Pauli type and a second Pauli type having support on a subset of the plurality of qubits, the quantum code is defined, at least in part, by a first check matrix representing a first set of parity checks of the first Pauli type and a second check matrix representing a second set of parity checks of the second Pauli type

**104** determining a hypergraph state representative of the quantum code from the plurality of qubits, the first check matrix, and second check matrix

**106** determining, based on the hypergraph state, a cone code that provides mapping between a first chain complex C derived from the first and second check matrices to a second chain complex A

**108** constructing a third check matrix of the first Pauli type and a fourth check matrix of the second Pauli type from the cone code, the third check matrix representing a third set of parity checks of the first Pauli type that are homologically equivalent to the first set of parity checks and the fourth check matrix representing a fourth set of parity checks of the second Pauli type that are homologically equivalent to the second set of parity checks

**110** preparing, on a quantum computer, a plurality of ancillary qubits in support of the third set of parity checks of the first Pauli type and the fourth set of parity checks of the second Pauli type

**112** performing one or more homological measurements on the plurality of ancillary qubits

**FIG. 1**

---

**Algorithm 1:** Greedy algorithm to add edges to a graph to obtain a Cheeger constant of one.

---

**Input:** Hypergraph $A = \mathcal{G}(V, E)$ with Cheeger constant $h(A) < 1$.

**Output:** A hypergraph $B$ with Cheeger constant $h(B) = 1$, the same vertices as $A$, and a superset of the edges of $A$.

$E^* \leftarrow E$ and $B \leftarrow \mathcal{G}(V, E^*)$

**while** $h(B) < 1$ **do**

    // Find the sparsest cut:

    $S \leftarrow \underset{S \subset V,\ |S| \leq |V|/2}{\arg\min} \left\{ \dfrac{|\partial S|}{|S|} \right\}$ where $\partial S$ is calculated using the edges $E^*$.

    // Add an appropriate edge:

    $h^* \leftarrow -\infty$ and initialize an edge $e$ that will be overwritten.

    **for** $v_1$ *a vertex of minimum degree in* $S$ **do**

        **for** $v_2$ *a vertex of minimum degree in* $V \setminus S$ **do**

            **if** $h(\mathcal{G}(V, E^* \cup \{(v_1, v_2)\})) > h^*$ **then**

                $h^* \leftarrow h(\mathcal{G}(V, E^* \cup \{(v_1, v_2)\}))$

                $e \leftarrow (v_1, v_2)$

            **end**

        **end**

    **end**

    $E^* \leftarrow E^* \cup \{e\}$ and $B \leftarrow \mathcal{G}(V, E^*)$

**end**

**return** $B$

---

**FIG. 2**

FIG. 3

---

**Algorithm 2:** Random search for low weight $\partial_0$.

---

**Input:** $\partial_1$, $H_Z$, $f_0$, number of random samples $n$

**Output:** $\partial_0$

1 Define $V$ to be any matrix whose rows form a basis of $\{v^T f_0 \mid v \in \ker H_Z^T\}$.

2 Put $V$ in reduced row echelon form.

3 Define $W$ to be any matrix such that $\ker W \cong \operatorname{im} \partial_1$.

4 Add rows of $V$ to rows of $W$ to zero out the pivot columns of $V$ in $W$.

5 Put $W$ in reduced row echelon form with zero-rows removed.

6 Initialize $\partial_0 \leftarrow W$

7 **for** $i \in \{1, \ldots, n\}$ **do**

8     Let $A$ be a random, invertible matrix [60].

9     Let $B$ be a random (not necessarily invertible) matrix.

10     **if** *the maximum row weight of $AW + BV$ is less than that of $\partial_0$* **then**

11         $\partial_0 \leftarrow AW + BV$.

12     **end**

    // Frequently, not adding rows of $V$ gives lower weight. Check for this:

13     **if** *the maximum row weight of $AW$ is less than that of $\partial_0$* **then**

14         $\partial_0 \leftarrow AW$.

15     **end**

16 **end**

17 **return** $\partial_0$

---

**FIG. 4**

(a)

(b)

(c)

FIG. 5

600

**602** initializing one or more ancilla qubits based on the plurality of qubits

**604** measuring one or more stabilizers of the first Pauli type defined by the third check matrix

**606** measuring one or more stabilizers of the second Pauli type defined by the fourth check matrix

**608** performing error correction on the one or more ancilla qubits by measuring the one or more stabilizers of the first and second Pauli types a plurality of times

**610** measuring the error corrected ancilla qubits to recover the quantum code

**FIG. 6**

---

**Algorithm 3:** Main construction for the edge
expanded homological measurement

---

**Input:** A code $\mathcal{C} = \mathrm{CSS}(H_X, H_Z)$ and $X$-logical
operator $\bar{X}$

**Output:** A code $\widetilde{\mathcal{C}}$ with at least the distance of $\mathcal{C}$,
with $\bar{X}$ in the stabilizer group, and with all
other logical operators unharmed.

1 Define $f_1$, $\partial_1^*$, and $f_0^*$ as in Eqs. (35), (47) and (48).

2 Apply Algorithm 1 to the incidence matrix $\partial_1^*$ to
obtain a new incidence matrix $\partial_1$.

3 Add zero columns to $f_0^*$ corresponding to the new
edges from the previous step obtaining $f_0$

4 Apply Algorithm 2 to $\partial_1$, $H_Z$, and $f_0$ to obtain $\partial_0$

5 **if** *the sparsity of $\partial_0$ is deemed unacceptable* **then**

6    $\partial_1 \leftarrow \partial_1^*$

7    $f_1 \leftarrow f_1^*$

   // Expand hyperedges to weight-two edges

8    **for** *each row $e$ of $\partial_1$ with* $\mathrm{wt}\, e > 2$ **do**

9      Replace $e$ with $(\mathrm{wt}\, e)/2$ weight-two rows that
sum to $e$ that keep the Cheeger constant as
high as possible.

10      Replace the column of $f_0$ that corresponds to $e$
with $(\mathrm{wt}\, e)/2$ copies of that column.

11    **end**

12    Apply Algorithm 1 to the incidence matrix $\partial_1$
which adds new edges to $\partial_1$.

13    Add zero columns to $f_0$ corresponding to the new
edges from the previous step.

   // find a cycle basis

14    Apply Algorithm 2 to $\partial_1$, $H_Z$, and $f_0$ to obtain $\partial_0$

   // cellulate large cycles

15    **for** *each row $c$ of $\partial_0$ with* $\mathrm{wt}\, c$ *higher than desired*
   **do**

16      Add new edges (rows of $\partial_1$, along with
corresponding zero-columns of $f_0$) within the
cycle defined by $c$ to break it into smaller
cycles. This results in replacing the high
weight row $c$ with multiple lower weight rows
corresponding to the new cycles.

17    **end**

18 **end**

19 Define $\widetilde{\mathcal{C}}$ to be the mapping cone of $f$ as in Eq. (12)

20 **return** $\widetilde{\mathcal{C}}$

---

**FIG. 7**

FIG. 8

FIG. 9

(a) $[[175, 19, 10]]$ lifted product code, $\text{LP}_1$.

(b) $[[225, 21, 12]]$ lifted product code, $\text{LP}_2$.

**FIG. 10**

(a) $[[625, 25, 8]]$ hypergraph product code, $HGP_1$.

(b) $[[900, 36, 10]]$ hypergraph product code, $HGP_2$.

**FIG. 11**

## EUROPEAN SEARCH REPORT

Europäisches
Patentamt
European
Patent Office
Office européen
des brevets

**Application Number**

**EP 25 20 4260**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHILIN HUANG ET AL: "Homomorphic Logical Measurements", ARXIV.ORG, CORNELL UNIVERSITY LIBRARY, 201 OLIN LIBRARY CORNELL UNIVERSITY ITHACA, NY 14853, 8 November 2022 (2022-11-08), XP091363041, | 1,12-20 | INV. G06N10/70 |
| A | * page 1 - page 8 * | 2-11 | |
| A | ERIC SABO ET AL: "Weight Reduced Stabilizer Codes with Lower Overhead", ARXIV.ORG, CORNELL UNIVERSITY LIBRARY, 201 OLIN LIBRARY CORNELL UNIVERSITY ITHACA, NY 14853, 7 February 2024 (2024-02-07), XP091682949, * page 24 - page 28 * | 1-20 | |
| A | ALEXANDER COWTAN ET AL: "CSS code surgery as a universal construction", ARXIV.ORG, CORNELL UNIVERSITY LIBRARY, 201 OLIN LIBRARY CORNELL UNIVERSITY ITHACA, NY 14853, 7 May 2024 (2024-05-07), XP091747942, * page 1 - page 37 * | 1-20 | |
| | | | **TECHNICAL FIELDS SEARCHED (IPC)** |
| | | | G06N |
| A | ALEXANDER COWTAN: "SSIP: automated surgery with quantum LDPC codes", ARXIV.ORG, CORNELL UNIVERSITY LIBRARY, 201 OLIN LIBRARY CORNELL UNIVERSITY ITHACA, NY 14853, 12 July 2024 (2024-07-12), XP091819066, * the whole document * | 1-20 | |

The present search report has been drawn up for all claims

| Place of search | Date of completion of the search | Examiner |
|---|---|---|
| The Hague | 10 February 2026 | Keresztury, Bence |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63699940

**Non-patent literature cited in the description**

- **HUANG et al.** Homomorphic Logical Measurements. *PRX Quantum*, 2023, vol. 4, 030301
- **COHEN et al.** Low-overhead fault-tolerant quantum computing using long-range connectivity. *Science Advances*, 2022, vol. 8, eabn1717
- **COWTAN** ; **BURTON**. CSS code surgery as a universal construction. *Quantum*, 2024, vol. 8, 1344
- An introduction to homological algebra. **C. A. WEIBEL**. Cambridge Studies in Advanced Mathematics No. 38. Cambridge university press, 1994
- **PANTELEEV** ; **KALACHEV**. Quantum LDPC Codes With Almost Linear Minimum Distance. *IEEE Transactions on Information Theory*, 2022, vol. 68, 213
- **TILLICH** ; **ZÉMOR**. Quantum LDPC Codes With Positive Rate and Minimum Distance Proportional to the Square Root of the Blocklength. *IEEE Transactions on Information Theory*, 2014, vol. 60, 1193
- **MACKAY** ; **NEAL**. *Electronics Letters*, 1996, vol. 32, 1645
- **WALSHE**. Linear-optical quantum computation with arbitrary error-correcting codes. *arXiv:2408.04126 [quant-ph*, 2024
- **IZITRIN**. Fault-Tolerant Quantum Computation with Static Linear Optics. *PRX Quantum*, 2021, vol. 2, 040353